**Europäisches Patentamt**

**European Patent Office**

**Office européen des brevets**

(19)

(11) **EP 1 433 693 A2**

(12) **EUROPEAN PATENT APPLICATION**

(43) Date of publication:
**30.06.2004 Bulletin 2004/27**

(51) Int Cl.⁷: **B62D 55/104**

(21) Application number: **03029009.2**

(22) Date of filing: **16.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.12.2002 JP 2002378019**
**17.09.2003 JP 2003324721**

(71) Applicant: **YAMAHA HATSUDOKI KABUSHIKI KAISHA**
**Iwata-shi Shizuoka-ken (JP)**

(72) Inventor: **Yoshihara, Masanori**
**Iwata-shi Shizuoka-ken (JP)**

(74) Representative: **Grünecker, Kinkeldey, Stockmair & Schwanhäusser Anwaltssozietät**
**Maximilianstrasse 58**
**80538 München (DE)**

(54) **Suspension device, in particular for a snow vehicle, and snow vehicle**

(57)    The invention relates to a suspension device for a vehicle, in particular a snow vehicle, comprising a slide rail for pressing a track belt against a riding surface, said slide rail being supported by a body of said vehicle, and a spring member urging said slide rail in a direction away from said body, wherein one end thereof is supported on said slide rail by a spring receiving part.

    The invention aims to provide a suspension device for a snow vehicle which can improve riding comfort and does not bottom out easily and whose spring reaction characteristic can be changed depending upon the user's preference. Therefore, the invention proposes that the spring receiving part is adjustable to the slide rail.

FIG. 2

EP 1 433 693 A2

**Description**

The present invention relates to a suspension device for a vehicle, in particular a snow vehicle, comprising a slide rail for pressing a track belt against a riding surface, said slide rail being supported by a body of said vehicle, and a spring member urging said slide rail in a direction away from said body, wherein one end thereof is supported on said slide rail by a spring receiving part. Further, the invention relates to a snow mobile comprising a body and having an engine unit and a steering device mounted thereto.

In general, a snow vehicle (which is referred to in general as snowmobile) is designed to run on uneven snow surfaces freely and is thus provided with a suspension device for absorbing shocks caused by unevenness of snow surfaces to improve riding comfort.

A conventional suspension device having a structure in which a torsion spring for reducing shocks transmitted from snow surfaces to the slide rail and an extendible shock absorber for reducing vertical vibration of the slide rail are interposed between a body frame and the slide rail is known for example from the Canadian Patent No. 2298749.

Therein, the torsion spring has a generally linear spring reaction characteristic. Namely, the spring reaction increases generally linearly with increase of an upward stroke of the slide rail. Thus, when the spring constant is set to a value on the softer side to improve riding comfort, so-called bottoming out occurs when the vehicle passes over a relatively large bump or the like. When the spring constant is set to a value on the stiffer side, bottoming out can be prevented but the softness of the suspension (good stroke feeling) is impaired and riding comfort is deteriorated.

Besides, a suspension device of the kind described above is known from US Patent No. 6,354,391B1. Therein, one end of the torsion spring is supported on the slide rail and the other on the body, and a tensioning block is disposed on the side of the slide rail to change the operation of the torsion spring.

This suspension device exhibits a so-called progressive effect. Namely, when the upward stroke of the slide rail increases over a prescribed value, the spring reaction significantly increases.

However, in such a suspension device, the spring reaction characteristic is unchangeably defined by the overall structure of the suspension device and cannot be adapted with respect to the load carried or the user's preference.

It is, therefore, an object of the present invention to provide a suspension device for a snow vehicle which offers an improved riding comfort and does not bottom out easily, and in which the spring reaction characteristic can be changed depending upon the user's preference. It is a further object of the invention to provide a snowmobile of the above kind which shows improved riding comfort.

For a suspension device of the above kind, this object is solved in an inventive manner in that said spring receiving part is adjustable relative to said slide rail.

Preferably, said spring member is a torsion spring or a plate spring. Therein, said spring receiving part is attachable and removable from said side rail. In particular, said spring receiving part is adjustable in a vertical and/or longitudinal direction relative to said slide rail.

Preferably, there are provided a plurality of spring receiving parts.

According to an embodiment of such a suspension device which is usable, in particular for a snow vehicle, the spring receiving part is adjustable between a vertical position and a horizontal position relative to the slide rail and preferably configured to abut on the spring member in an early stage of upward movement of the slide rail when positioned in the vertical position and abut on the spring member in an intermediate stage or later of upward movement of the slide rail when positioned in the horizontal position.

According to another embodiment, the spring receiving part attached to the slide rail via a link mechanism which changes the position of the spring receiving part relative to the slide rail when the slide rail is moved upward.

Preferably, said second end of the spring member is supported on the body (frame) or on a suspension arm connecting said slide rail to said body. It is possible that a spring receiving part, which changes the supporting point of the spring member on the slide rail when the slide rail is moved upward, is provided on the body frame.

Further preferably, the spring receiving part is attached to the slide rail so as to be slidable in the generally longitudinal direction.

According to another embodiment, said spring receiving part has a long hole extending in the generally longitudinal direction, through which a supporting shaft secured to said slide rail is inserted so as to be slidable in the generally longitudinal direction.

In this case, said spring receiving part is preferably rotatable in the forward and rearward directions around said supporting shaft when said supporting shaft is positioned in foremost and rearmost positions in the long hole, respectively.

According to still another embodiment, said spring receiving part is slidable along an inclined surface formed on said slide rail.

Said inclined surface is either linear and becomes higher toward the rear or the front of the vehicle, or convexly curved and becomes higher toward the rear or the front of the vehicle, or is concavely curved and becomes higher toward the rear or the front of the vehicle.

Further, for a snowmobile of the above kind, this object is solved in an inventive manner by the provision of a suspension device of the above kind, in particular according to one of the above embodiments.

In such a suspension device, when an upward stroke of the slide rail is not greater than a prescribed value, the spring member is elastically deformed with its other end supported and exhibits a spring reaction characteristic corresponding to the long spring length between its supporting points on the body and the slide rail. Namely, the suspension device exhibits a soft stroke feeling in which the spring reaction moderately increases with increase of the upward stroke of the slide rail, and can provide a comfortable ride. When the upward stroke of the slide rail reaches a prescribed value, the spring receiving part abuts on the spring member and, thereafter, the spring member is elastically deformed by the spring receiving member as a supporting point, and exhibits a spring reaction characteristic corresponding to the short spring length between its supporting point on the body and the spring receiving part. Namely, the suspension device exhibits a stiff stroke feeling in which the spring reaction sharply increases with increase of the upward stroke of the slide rail. As a result, bottoming out can be prevented.

Since the position of the spring receiving part is adjustable relative to the spring member, the spring reaction characteristic can be varied depending upon the user's preference. For example, as the spring receiving part is positioned farther from the other end of the spring member, the range of variation in the spring reaction is increased. Also, as the spring receiving part is positioned higher, the upward stroke of the slide rail in which the spring reaction varies is shortened.

The spring receiving part is attachable to and removable from the slide rail, and adjustable in at least one of a vertical direction and a longitudinal direction relative to the slide rail. Thus, the position of the spring receiving part can be adjusted relative to the spring member, and the spring reaction characteristic can be varied depending upon the user's preference with a simple structure.

As described above, when a plurality of spring receiving members are provided, the spring reaction can be adjusted in at lease two levels, and the range within which the spring reaction characteristic can be selected is wide.

As spring receiving part may be adjustable between a vertical position and a horizontal position relative to the slide rail and configured to abut on the spring member in an early stage of upward movement of the slide rail when positioned in the vertical position and abut on the spring member in an intermediate stage or later of upward movement of the slide rail when positioned in the horizontal position, a spring reaction characteristic suitable for two-person riding and a spring reaction characteristic suitable for one-person riding can be realized. When two persons are going to ride the vehicle, the spring receiving part is positioned in the vertical position. Then, the spring receiving part abuts on the spring member in an early stage of the stroke of the slide rail and the spring reaction is increased so that a large load of two persons can be supported. When one person is going to ride the vehicle, the spring receiving part is positioned in the horizontal position. Then, the spring receiving part abuts on the spring member in an intermediate stage or later of the stroke of the slide rail so that bottoming out can be prevented.

Moreover, since the position of the spring receiving part is changeable relative to the slide rail when the slide rail is moved upward, the degree of freedom in setting the spring reaction characteristic is significantly increased. Also, since the operation angle of the spring member is small, the spring stress generated in the spring member is small.

Since, a spring receiving part, which changes the supporting point of the spring member on the slide rail when the slide rail is moved upward, is provided on the slide rail, the unsprung weight is reduced. Also, since the operation angle of the spring member is small, the spring stress generated in the spring member is small.

Since, according to an embodiment, the spring receiving part is slidable in the generally longitudinal direction, the position of the spring receiving part relative to the spring member can be changed in the generally longitudinal direction, whereby the spring reaction characteristic depending upon the user's preference can be obtained.

Preferably, the spring receiving part has a long hole, through which a supporting shaft secured to the slide rail is inserted so that the spring receiving part is slidable in the generally longitudinal direction, using the supporting shaft as a guide. Thus, the position of the spring receiving part can be changed in the generally longitudinal direction with a simple structure. Also, the position can be adjusted with an easy operation.

Therein, the spring receiving part may be rotatable in the forward and rearward directions around the support shaft when the supporting shaft is positioned in the foremost and rearmost positions in the long hole, respectively. Thus, the position of the spring receiving part relative to the spring member can be changed through a wider range, whereby the spring reaction characteristic depending upon the user's preference can be obtained with a simple structure and a simple operation.

Because the spring receiving part may be slidable along an inclined surface formed on the slide rail, the position of the spring receiving part relative to the spring member can be changed both in the longitudinal and vertical directions with a simple structure.

According to one embodiment, the inclined surface is linear and becomes higher toward the rear or the front of the vehicle. Thus, the position of the spring receiving part can be changed in the longitudinal direction and in the vertical direction at the same time while the angle of the spring receiving part relative to the slide rail is kept constant.

According to another embodiment, the inclined surface is convexly curved and becomes higher toward the rear or the front of the vehicle, or the inclined surface is concavely curved and becomes higher toward the rear or the front of the vehicle. Thus, the position of the spring receiving part can be changed in the longitudinal direction and in the vertical direction while the angle of the spring receiving part relative to the slide rail can also be varied, whereby the spring reaction characteristic can be varied through a further wider range.

Further preferred embodiments are subject to the subclaims.

In the following, the invention will be explained in greater detail by means of embodiments with reference to the accompanying drawings, wherein:

Fig. 1        is a side view of a snow vehicle provided with a suspension device according to a first embodiment of the present invention;

Fig. 2        is a side view of the suspension device of the snow vehicle;

Fig. 3        is a side view of the suspension device;

Fig. 4        is a plan view of the suspension device;

Fig. 5        is a cross-sectional side view of a rear sliding arm of the suspension device;

Fig. 6        is a perspective view of a link mechanism of the suspension device;

Fig. 7        is a side view for explaining the operations of the link mechanism;

Fig. 8        is a cross-sectional front view of a spring receiving bracket:

Figs. 9(a) to (c)        are views for explaining the operations of a torsion spring of the suspension device;

Fig. 10        is a characteristic curve showing the relation between the stroke of a slide rail and spring reaction force;

Fig. 11 (a)        is a schematic view for explaining the reaction force of the torsion spring;

Fig. 11 (b)        is a formula for explaining the reaction force of the torsion spring;

Fig. 12        is a view illustrating the change in position of a spring receiving part of the torsion spring;

Fig. 13        is a characteristic curve showing the relation between the slide rail stroke and the spring reaction force in the case where the position of the spring receiving part is changed;

Figs. 14(a) and (b)        are schematic views illustrating the operations of the rear sliding arm;

Fig. 15        is a characteristic curve showing the relation between the slide rail stroke and the spring reaction force in the case where the rear sliding arm is provided,

Fig. 16        is a schematic view illustrating the operations of the link mechanism;

Fig. 17        is a characteristic curve showing the relation between the slide rail stroke and the shock ratio;

Fig. 18        is a schematic view illustrating the operations of the link mechanism;

Fig. 19        is a characteristic curve showing the relation between the slide rail stroke and the shock ratio;

Fig. 20        is a schematic view illustrating the operations of the link mechanism;

Fig. 21        is a characteristic curve showing the relation between the slide rail stroke and the shock ratio;

Fig. 22        is a schematic view for explaining a second embodiment of the present invention;

Fig. 23      is a characteristic curve showing the relation between the slide rail stroke and the spring reaction force in the second embodiment;

Fig. 24      is a cross-sectional front view of a spring receiving part in the second embodiment;

Fig. 25      is a perspective view of the spring receiving part in the second embodiment;

Fig. 26      is a schematic view for explaining a third embodiment of the present invention;

Figs. 27(a)      and (b) are schematic views for explaining the operations and effects of the third embodiment;

Figs. 28(a) to (c)      are schematic views for explaining a fourth embodiment of the present invention;

Fig. 29      is a cross-sectional front view of a spring receiving part in a fifth embodiment;

Fig. 30      is an exploded perspective view of the spring receiving part in the fifth embodiment;

Fig. 31      is a schematic view for explaining the operations of the spring receiving part;

Figs. 32(a) to (d)      are perspective views for explaining the operations of the spring receiving part;

Fig. 33      is a stroke-spring reaction characteristic curve showing for explaining the effects of the fifth embodiment;

Fig. 34      is a schematic view of a spring receiving part for explaining a sixth embodiment;

Fig. 35      is a schematic view of a spring receiving part for explaining a seventh embodiment; and

Fig. 36      is a schematic view of a spring receiving part for explaining an eighth embodiment.

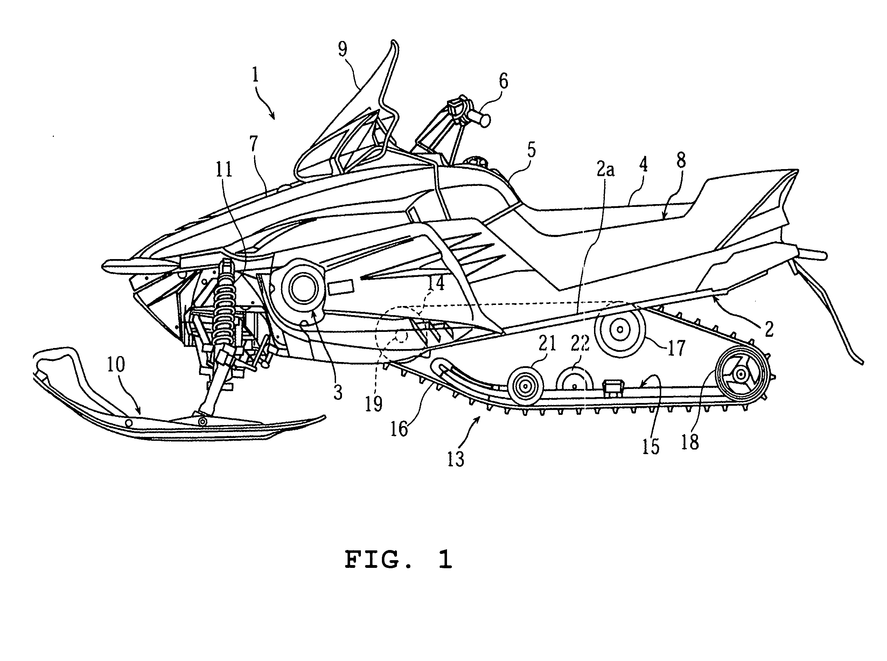

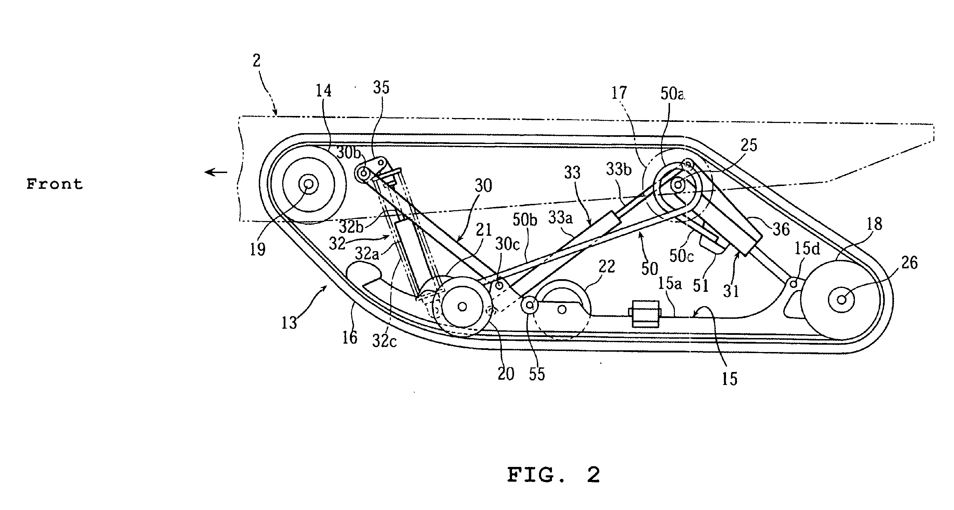

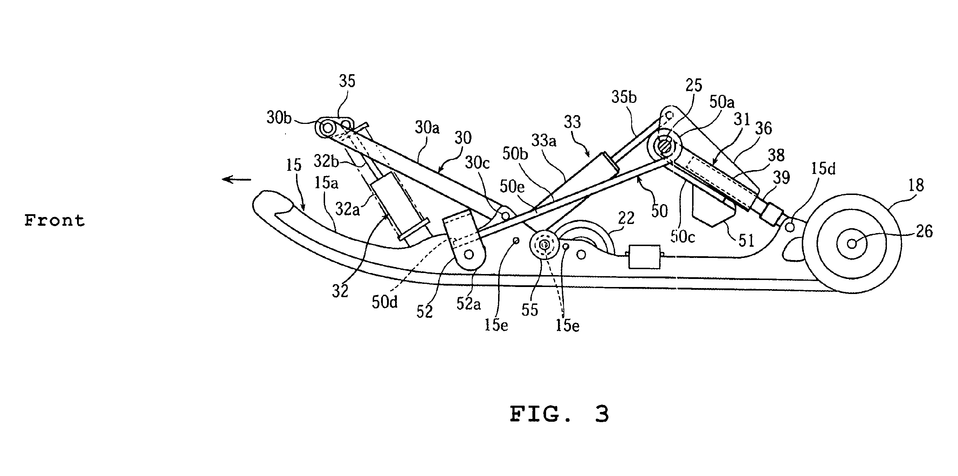

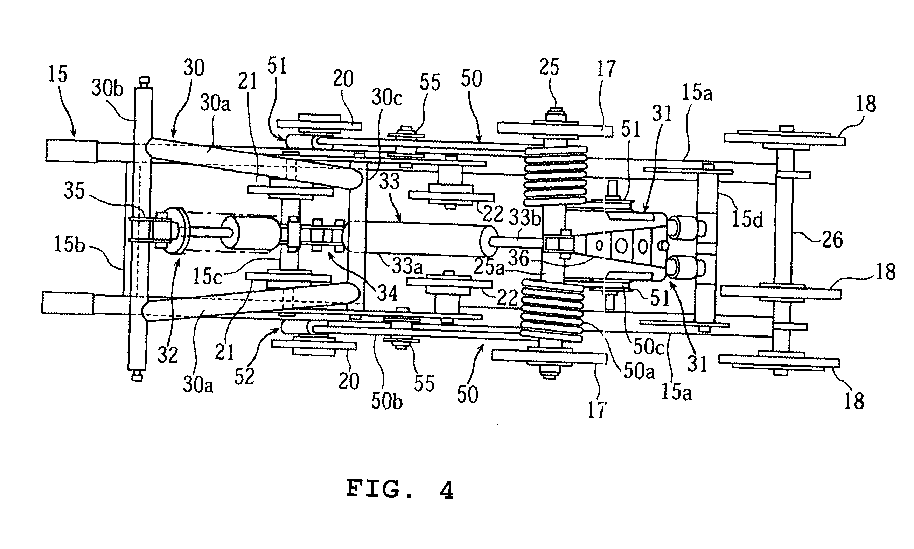

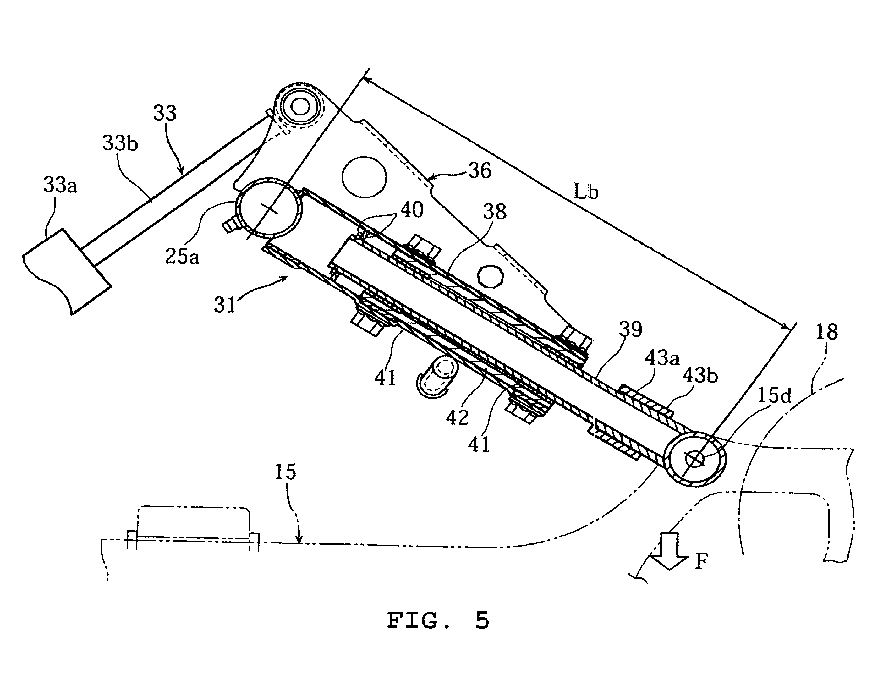

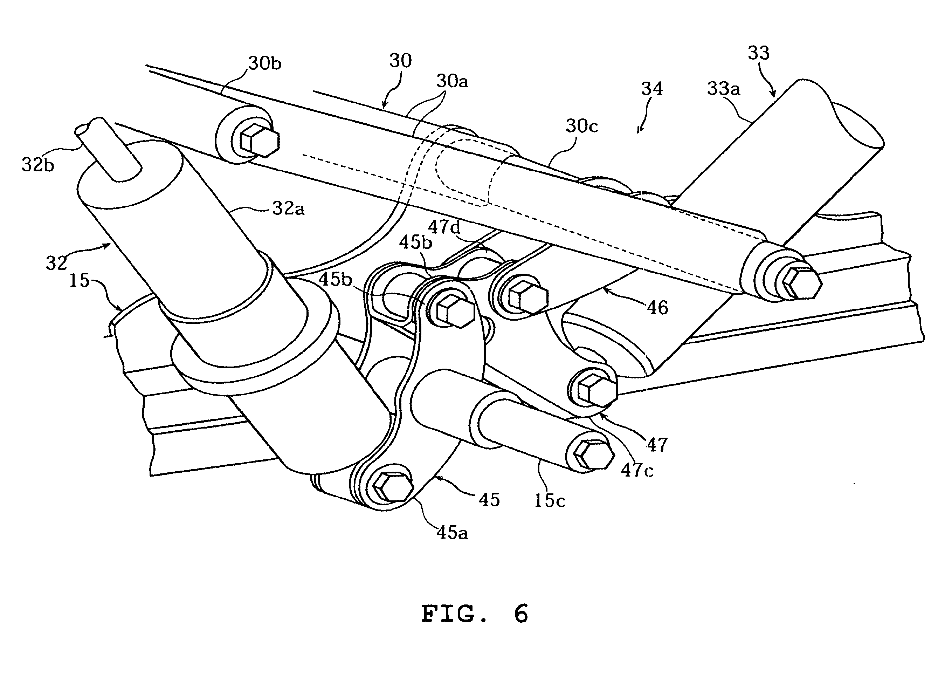

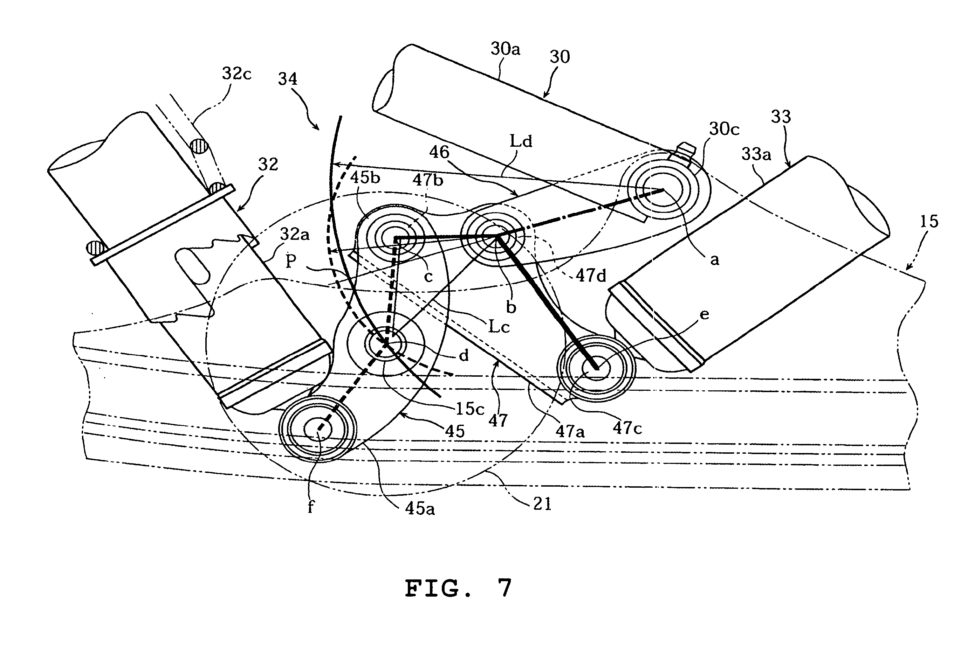

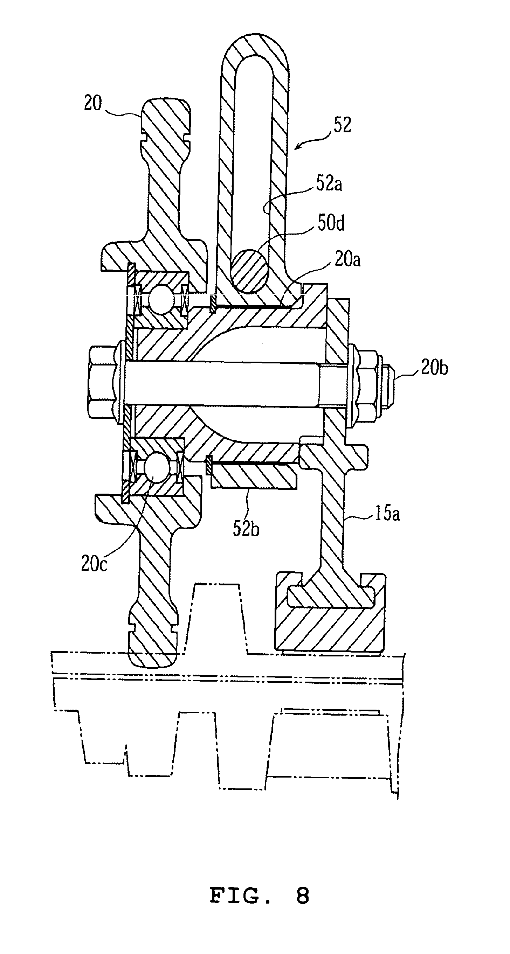

Fig. 1 to Fig. 8 are views for explaining a suspension device for a snow vehicle according to a first embodiment of the present invention. Fig. 1 is a side view of a snow vehicle, Fig. 2 is a side view of a driving track and a suspension device of the snow vehicle. Fig. 3 and Fig. 4 are a side view and a plan view, respectively, of the suspension device. Fig. 5 is a cross-sectional side view of a rear sliding arm. Fig. 6 and Fig. 7 are a perspective view and a side view, respectively, of a link mechanism for connecting front and rear shock absorbers. Fig. 8 is a cross-sectional front view of a spring member supporting part.

In Fig. 1, designated as 1 is a schematically illustrated snow vehicle (snowmobile) comprising a body frame 2, an engine unit 3 mounted on a front portion of the body frame 2, a saddle type seat 4 disposed on an upper rear portion of the body frame 2, a fuel tank 5 and a steering handle 6 disposed in front of the seat 4. Footrests 2a for supporting the rider's feet are formed on the body frame 2 on both right and left sides below the seat 4. A front portion of the body frame 2 is covered with a front cover 7 and a part of the body frame 2 below the seat 4 is surrounded by a side cover 8. A windshield 9 for blocking a head wind is disposed in front of the steering handle 6.

Steering skis 10 and 10 are disposed on both right and left sides of the front end of the body frame 2. Each of the steering skis 10 and 10 is supported by a front suspension device 11 for vertical swinging movement and steerable to the right and left with the steering handle 6.

A driving track 13 is located at the rear half of the body frame 2. The driving track 13 comprises a large-width track belt 16 entrained around a driving wheel 14, a slide rail 15, lower guide wheels 18 and upper guide wheels 17 and held in a generally parallelogram shape as a whole as viewed from a side.

When the engine unit 3 drives a driving shaft 19 of the driving wheel 14, the track belt 16 of the driving track 13 is rotated to drive the snow vehicle 1. The running direction of the snow vehicle 1 can be freely controlled by rotating the steering skis 10 to the right or left with the steering handle 6.

The slide rail 15 presses the track belt 16 against a snow surface and guiding it, and comprises a pair of right and left side rails 15a and 15a extending in the longitudinal direction of the vehicle, and front, intermediate and rear cross shafts 15b, 15c and 15d extending in the lateral direction of the vehicle, an upper arm shaft 30b and a wheel shaft 26 extending in the vehicle width direction which are joined generally in a grid pattern. On the slide rail 15, pairs of right and left guide pulleys 20, 21 and 22 for guiding and supporting a lower part of the track belt 16 are pivoted.

The right and left upper guide wheels 17 are mounted on a wheel shaft 25 secured to the body frame 2. The right and left lower guide wheels 18 are mounted on the wheel shaft 26 disposed at the rear ends of the right and left side rails 15a in a longitudinally adjustable manner.

A suspension device is interposed between the body frame 2 and the slide rail 5. The suspension device comprises a front suspension arm 30 for supporting the slide rail 15 for vertical swinging movement, rear sliding arms 31, front and rear shock absorbers 32 and 33 for reducing shocks from snow surfaces and absorbing vertical vibration, a link mechanism 34 connecting the front and rear shock absorbers 32 and 33, and a pair of right and left torsion springs 50. More specifically, the suspension device has the following constitution.

The front suspension arm 30, which extends rearward and downward from a front part of the vehicle, comprises right and left arms 30a and 30a and upper and lower arm shafts 30b and 30c extending in the vehicle width direction and joined to the upper and lower ends, respectively, of the right and left arms 30a and 30a by welding, and has a generally trapezoid configuration. The upper arm shaft 30b and the lower arm shaft 30c of the front suspension arm 30 are pivoted to the body frame 2 and slide rails 15, respectively.

The front shock absorber 32, which is located in front of the front suspension arm 30 and extends rearward and downward from a front part of the vehicle, comprises a cylinder 32a in which hydraulic oil is sealed, a piston rod 32b slidably inserted in the cylinder 32a via a damping mechanism (not shown), and a coil spring 32c interposed between the piston rod 32b and the cylinder 32a. The upper end of the piston rod 32b is rotatably connected to an end of a bracket 35, which is secured to the upper arm shaft 30b. The end of the bracket 35 is oriented toward the rear of the vehicle.

The rear shock absorber 33, which is disposed generally in symmetric relation to the front shock absorber 32 and extends upward toward the rear of the vehicle, comprises a cylinder 33a in which hydraulic oil is sealed and a piston rod 33b slidably inserted in the cylinder 33a via a dumping mechanism (not shown). The upper end of the piston rod 33b is rotatably connected to the upper end of a supporting bracket 36 secured to the rear sliding arms 31. The upper end of the supporting bracket 36 is located above the point of connection of the rear sliding arm 31 to the body.

Two rear sliding arms 31 are arranged on the right and left and disposed in generally parallel to the front suspension arm 30. The right and left rear sliding arms 31 are connected to each other via the supporting bracket 36 to enhance torsional rigidity about their axes.

As shown in Fig. 5, each of the rear sliding arms 31 comprises a cylindrical member 38 and a cylindrical sliding shaft 39 inserted in the cylindrical member 38 for relative movement in the direction of its axis so that an arm length Lb can be varied according to the vertical swinging strokes of the slide rail 15.

The upper end of the cylindrical members 38 is secured to a pipe 25a rotatably connected to the wheel shaft 25 secured to the body frame 2. The lower end of the sliding shaft 39 is rotatably connected to the rear cross pipe 15d secured to the slide rail 15. A bushing 42 is secured to the inside surface of the cylindrical members 38. A pair of front and rear bushes 41 and 41 are secured to the inside surface of the bushing 42 in sliding contact with the outside surface of the sliding shaft 39.

A plurality of shims 40 are attached to the upper end of the sliding shaft 39 in sliding contact with the inside surface of the cylindrical member 38. By increasing or decreasing the number of the shims 40, the maximum value of the length Lb of the sliding arm 31 can be adjusted. An adjusting nut 43a and a lock nut 43b are threaded on a lower part of the sliding shaft 39. By rotating the nuts 43a and 43b, the minimum value of the length Lb of the sliding arm 31 can be adjusted.

As shown in Fig.6 and Fig. 7, the link mechanism 34 comprises a first link 45 to which the lower end of the front shock absorber 32 is rotatably connected, a second link 46 secured to the lower arm 30c of the front suspension arm 30, and 3 third link 47, which rotatably connects the first and second links 45 and 46, and to which the rear shock absorber 33 is rotatably connected.

The first link 45 comprises a pair of right and left plates having an arcuate shape as viewed from a side and rotatably supported by the intermediate cross shaft 15c, namely by the slide rail 15. The first link 45 has a lower end 45a to which the cylinder 32a of the front shock absorber 32 is rotatably connected.

The third link 47 has a generally triangular shape as viewed from a side and has a base 47a having one end 47b, to which an upper end 45b of the first link 45 is rotatably connected, and the other end 47c to which the cylinder 33a of the rear shock absorber 33 is rotatably connected. The third link 47 has an apex 47d at the top of the triangle to which the front end of the second link 46 is rotatably connected.

The positional relation among a connection point "a" between the second link 46 and the front suspension arm 30, a connection point "b" between the second and third links 46 and 47, a connection point "c" between the first and third links 45 and 47, a connection point "d" of the first link 45, a connection point "f" between the first link 45 and the front shock absorber 32, and a connection point "e" between the third link 47 and the rear shock absorber 33 are determined as described in the following (1) to (3).

(1) By properly determining the positional relation among the connection points "a", "b" and "d", it is possible to freely determine the state of change in the distance Lc between the connection points "b" and "d" at an upward stroke S of the slide rail 15.

In this embodiment, for example, the positional relation among the connection points "a", "b" and "d" are determined such that an arc with a radius ad (Ld = constant) and an arc with a radius bd (Lc = variable) are crossed with each other with increase of the upward stroke S of the slide rail. This means that the length Lc decreases in an initial part of the stroke range of the slide rail 15 and increases in the latter part of the stroke range after a changing point P.

Namely, in the initial part of the stroke range, since the length Lc is decreased, the operation rates of the front and rear shock absorbers 32 and 33, namely the contraction stroke of the shock absorbers per unit stroke of the slide rail, is small. Thus, the spring reaction is small and a comfortable stroke feeling is obtained. In the latter part of the stroke range, since the length Lc is increased, the operation rates of the front and rear suspension arms 32 and 33 are large and the spring reaction is large. Namely, a progressive effect can be obtained.

(2) By properly determining the vertex angles and the side lengths of the triangle formed by connecting the connection points "b", "c" and "d", namely, by properly determining the position of the connection point "c", the strokes of the front and rear shock absorbers 32 and 33 and the directions of the strokes can be changed.

In this embodiment, for example, the connection points "b", "c" and "d" are so arranged that the vertex angles "b" and "d" are always acute as shown in Fig. 7. Thus, the operation rates of the front and rear shock absorbers 32 and 33 both decreases when the length Lc becomes shorter and increases when the length Lc becomes longer.

(3) By properly determining a ratio R1 of the distance between the connection points "c" and "d" to the distance between the connection points "d" and "f", and a ratio R2 of the distance between the connection points "b" and "c" to the distance between the connection points "b" and "e", the displacement of the front and rear shock absorbers 32 and 33 can be changed.

The torsion springs 50 are located between the body frame 2, and the right and left side rails 15a, individually, and urge the slide rail 15 in a direction away from the body frame 2. Each of the torsion springs 50 is formed by winding a middle part of a rod-like spring body into a coil and has a coiled part 50a, a long side part 50b extending forward from the coiled part 50a and a short side part 50c extending rearward from the coiled part 50a.

The coiled part 50a of the torsion spring 50 is wound around the pipe 25a, and the short side part 50c is supported from below by a bracket 51 secured to a lower side of the rear sliding arm 31.

The long side part 50b has an extending end 50d supported by a spring receiving bracket 52 attached to the side rail 15a of the slide rail 15. The spring receiving bracket 52 has an ellipsoid supporting hole 52a having a major axis extending vertically and a lower portion 52b secured to and supported by a supporting shaft 20a of the guide wheels 20. The supporting shaft 20a is secured to the side rails 15a with bolts 20b and rotatably supports the guide wheels 20 via bearings 20c. The extending end 50d of the long side part 50b of the torsion spring 50 is supported by the bottom surface in the ellipsoid supporting hole 52 and vertically movable within the supporting hole 52.

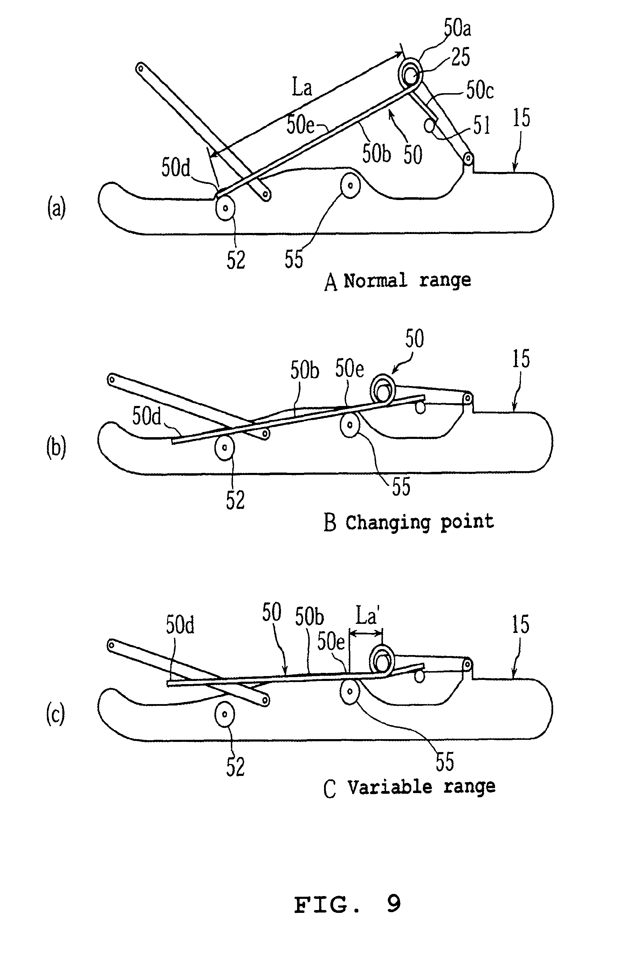

As shown in Fig. 3, each of the right and left side rails 15a has three spring receiving holes 15e at longitudinally spaced points. Each spring receiving hole 15e is located in a position higher than the one located rearward of it. A bobbin-shaped spring receiving member 55 comprising a circular rod and flanges provided at both ends of the rod is removably attached in each of the spring holes 15e at the center in the longitudinal direction. The spring receiving members 55 abut on longitudinal intermediate portions 50e of the long side parts 50b when the slide rail 15 strokes beyond a prescribed value in passing over a bump on a snow surface to change the spring reaction thereafter in a step-like manner as shown in Fig. 9.

The spring receiving members 55 may be attached in the front or rear spring receiving holes 15e depending upon the user's preference. When the spring receiving members 55 are located on the front side, the variation in spring reaction becomes small. When the spring receiving members 55 are located on the rear side, the variation in spring reaction becomes large. When attached in the front side, the spring receiving members 55 are located in positions slightly higher than when they are attached to the center and thus abut on the longitudinal intermediate portions 50e before the stroke of the slide rail 15 reaches the prescribed value. When attached to the rear side, the spring receiving members 55 abut on the longitudinal intermediate portions 50e after the stroke of the slide rail 15 has exceeded the prescribed value.

Descriptions will be made of the effects of this embodiment.

When the snow vehicle 1 runs on an uneven snow surface, the slide rail 15 strokes up and down about a connection point 30b where the front suspension arm 30 is connected to the body, and connection points 25 where the rear sliding arms 31 are connected to the body. At the same time, the front and rear shock absorbers 32 and 33 extend or contract, and impulsive forces are reduced and vibration is absorbed by spring reaction forces and damping forces generated by the extension and contraction of the shock absorbers 32 and 33.

In this embodiment, the front sliding arm 30, and the front and rear shock absorbers 32 and 33 are connected by the link mechanism 34 comprising the first link 45, to which the front shock absorber 32 is connected and which is pivoted to the slide rail 15, the second link 46 secured to the slide rail side pivot point of the sliding arm 30, and the third link 47, which connects the first and second links 45 and 46, and to which the rear shock absorber 33 is connected. Thus, the shock ratio or the lever ratio, which is a ratio of the shock absorber stroke to the slide rail stroke, can be made suitable for the stroke range of the slide rail 15. Also, soft-touch stroke feeling can be obtained and bottoming out can be prevented.

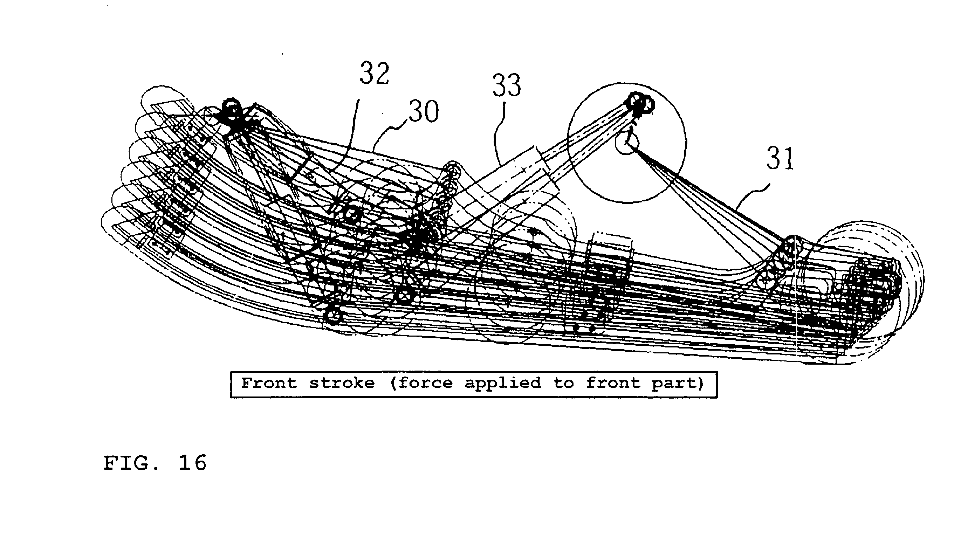

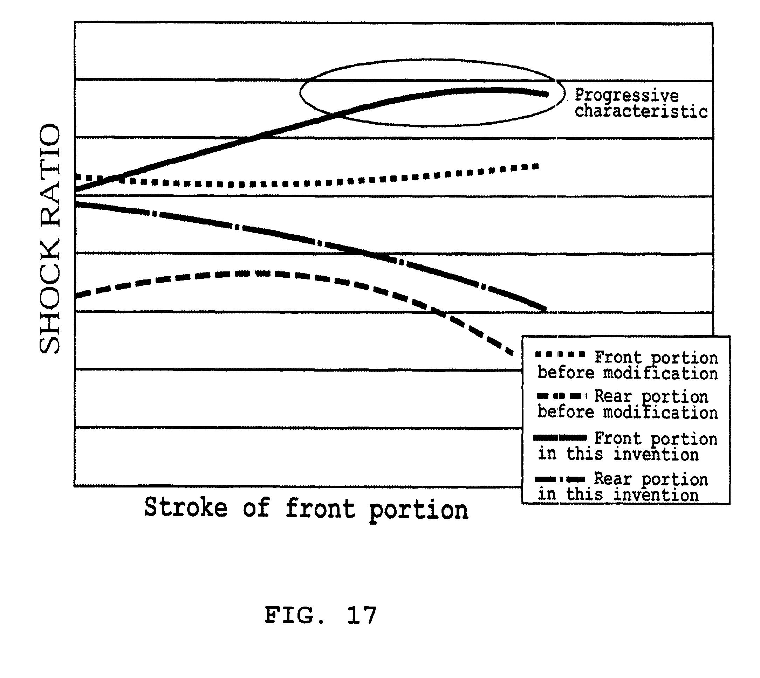

As shown in Fig. 16 and Fig. 17, when a force is applied to a front part of the slide rail 15 and a front portion of the slide rail 15 largely strokes, the shock ratio of the front shock absorber 32 (the stroke of the front shock absorber per unit stroke of the front portion of the slide rail) becomes larger as the stroke of the front portion of the slide rail becomes larger. This indicates that a progressive characteristic is obtained.

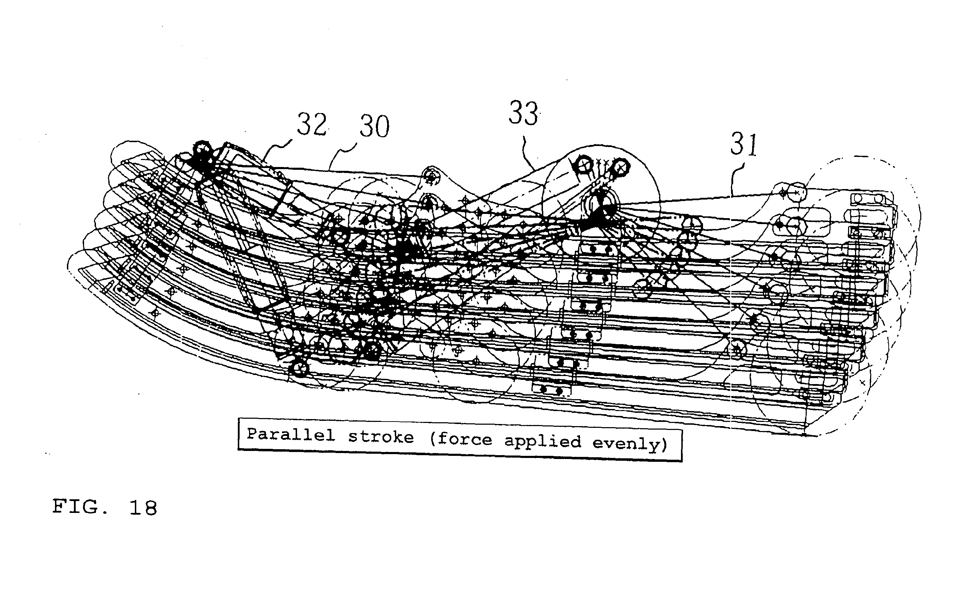

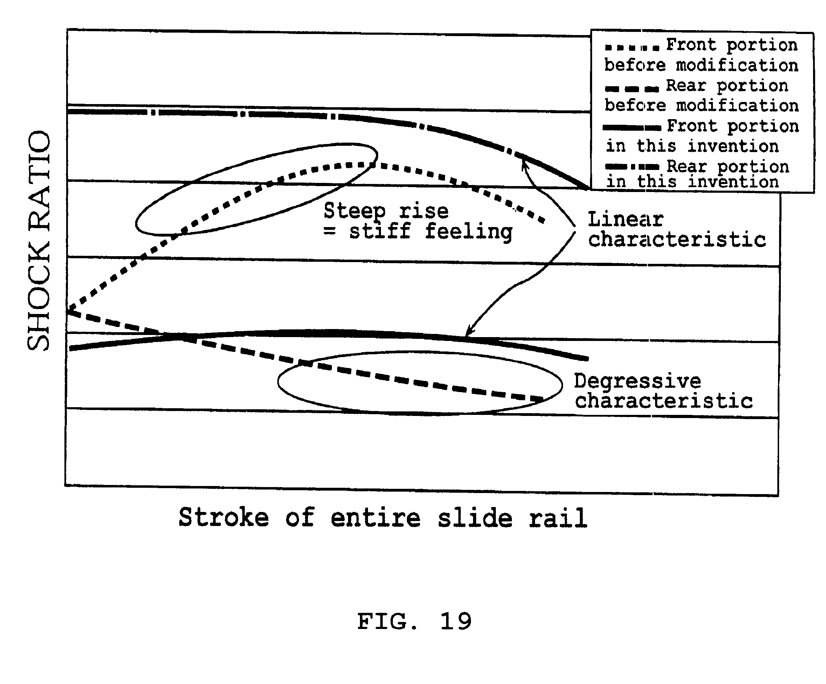

As shown in Fig. 18 and Fig. 19, when a force is applied evenly to the entire slide rail 15 and the entire slide rail 15 strokes evenly, the shock ratios of the front and rear shock absorbers 32 and 33 both exhibit a linear characteristic. Namely, the increasing rates of the strokes of the shock absorbers hardly change even when the stroke of the slide rail increases. This indicates that a soft stroke feeling is obtained.

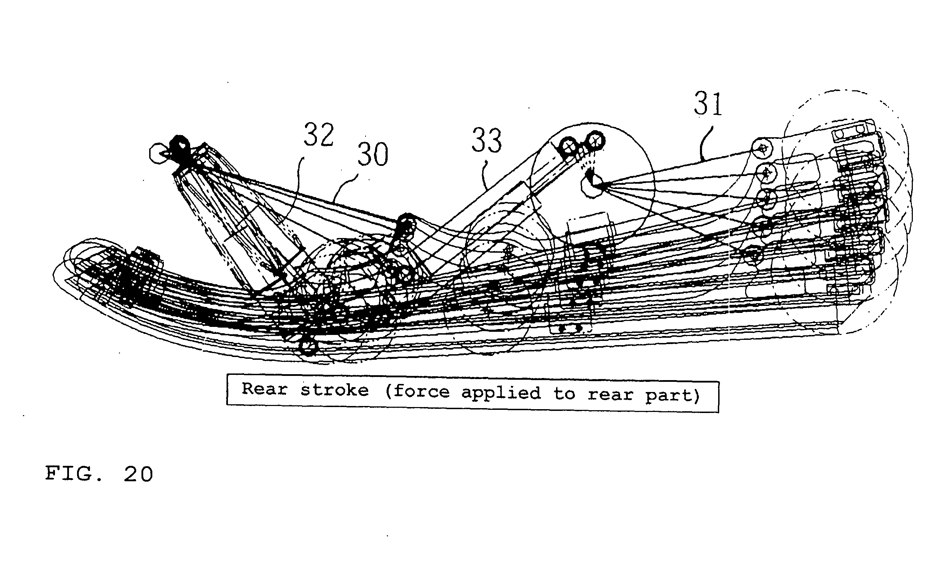

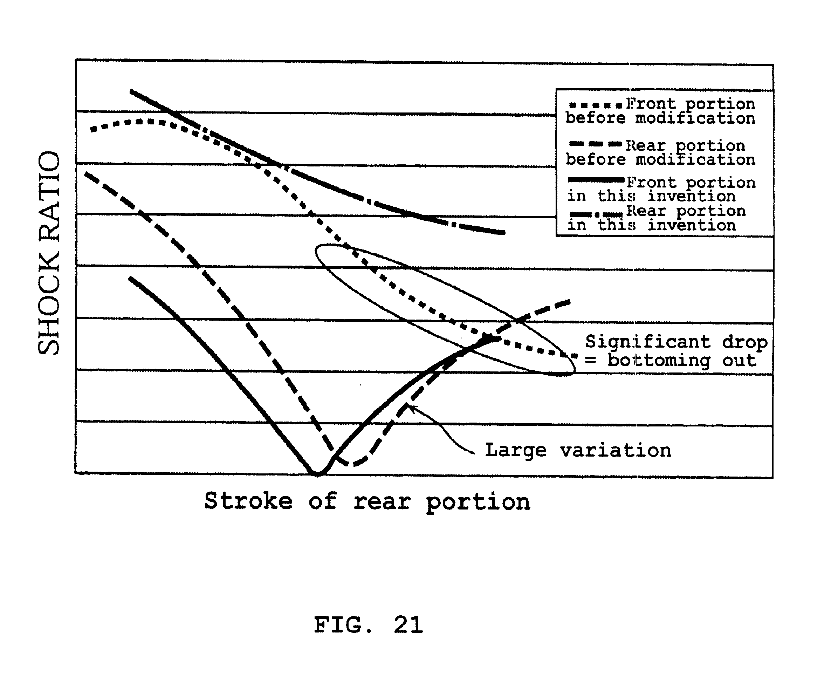

As shown in Fig. 20 and Fig. 21, when a force is applied to a rear part of the slide rail 15 and a rear portion of the slide rail 15 largely strokes, the drop in the shock ratio of the rear shock absorber is decreased in this embodiment, which means that bottoming out can be prevented, although the shock ratio of the rear shock absorber is significantly lowered and bottoming out occurs easily before modification. Also, the variation range of the shock ratio of the front shock absorber 32 is decreased as compared with that before modification.

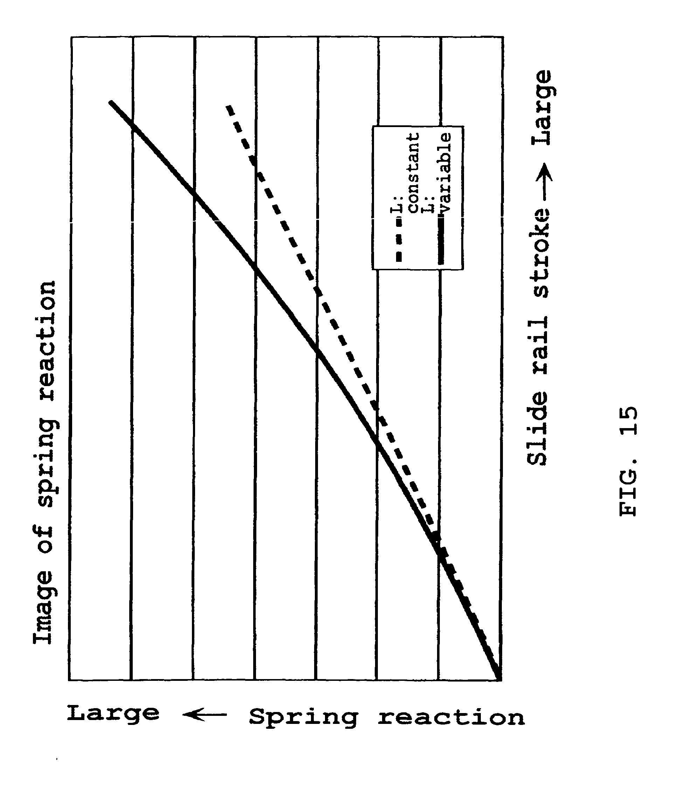

In this embodiment, each of the rear sliding arms 31 is constituted of the cylindrical member 38 and the sliding shaft 39 inserted in the cylindrical member 38 for relative movement in the direction of its axis so that the arm length Lb can be changed according to the strokes of the sliding rail 15. More specifically, the rear sliding arms 31 contract more largely and the effective arm length Lb is decreased as the stroke of the slide rail 15 is larger. Thus, as shown in Fig. 15, a soft stroke feeling can be obtained in the first half of the stroke of the slide rail 15. In the latter half of the stroke of the slide rail 15, the increasing rate of the spring reaction increases as the stroke becomes larger. As a result, riding comfort can be ensured and bottoming out can be prevented.

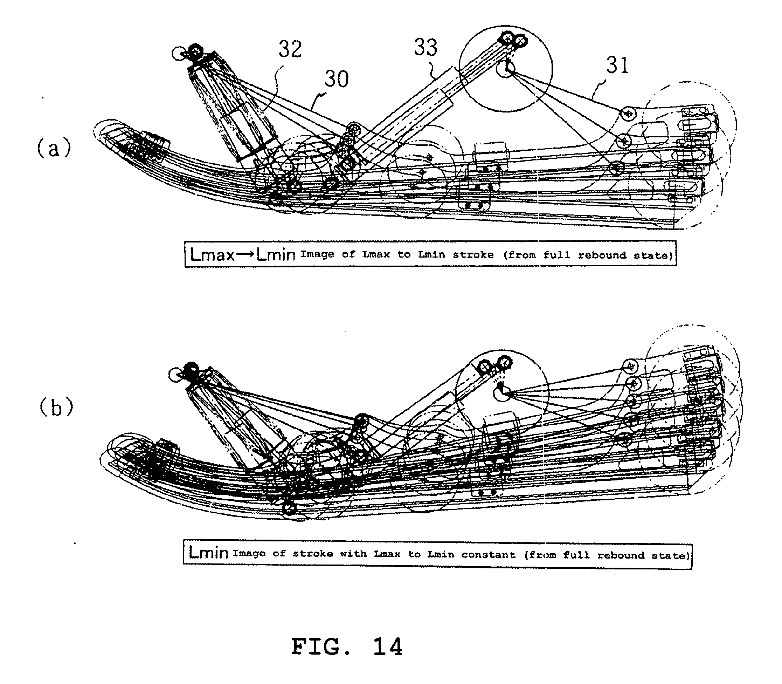

Fig. 14 shows images schematically illustrating the operations of the parts of the suspension device at the time when the side rail strokes from its full rebound state.

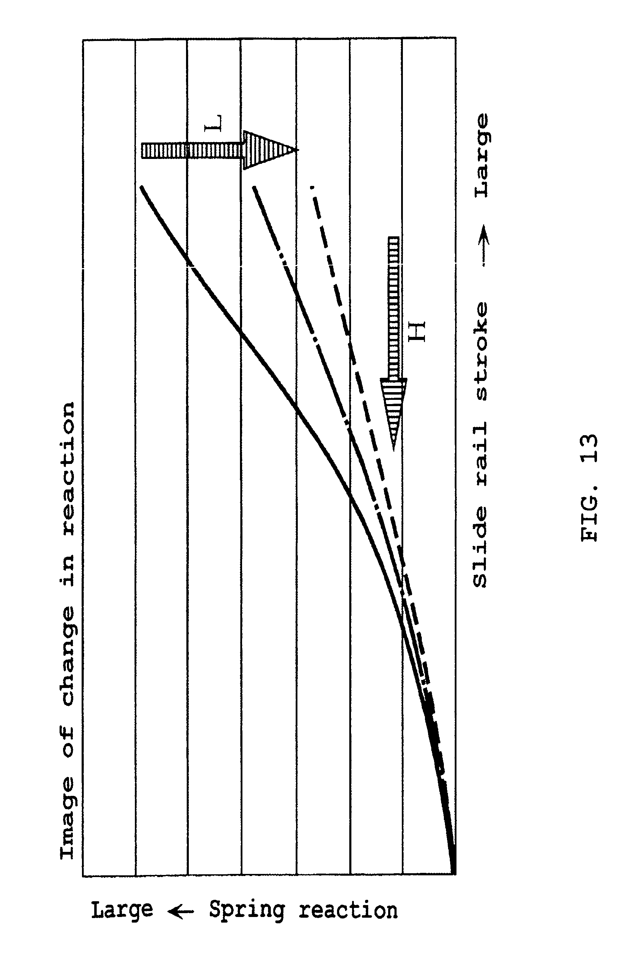

Fig. 13(a) shows a case in which a rear portion of the slide rail 15 largely strokes and the rear sliding arms 31 stroke from Lmax to Lmin. As shown in the drawing, as the stroke of the rear portion of the slide rail 15 becomes larger, the stroke of the rear shock absorber 33 increases. This indicates that the spring reaction of the rear shock absorber 33 exhibits a generally linear characteristic.

Fig. 13(b) shows a case in which a rear portion of the slide rail 15 largely strokes with the length of the rear sliding arms 31 held at Lmin. As shown in the drawing, as the stroke of the rear portion of the slide rail 15 becomes larger, the stroke of the rear shock absorber 33 increases more largely than that in the case shown in Fig. 14(a). This indicates that the spring reaction of the rear shock absorber 33 exhibits an aggressive characteristic.

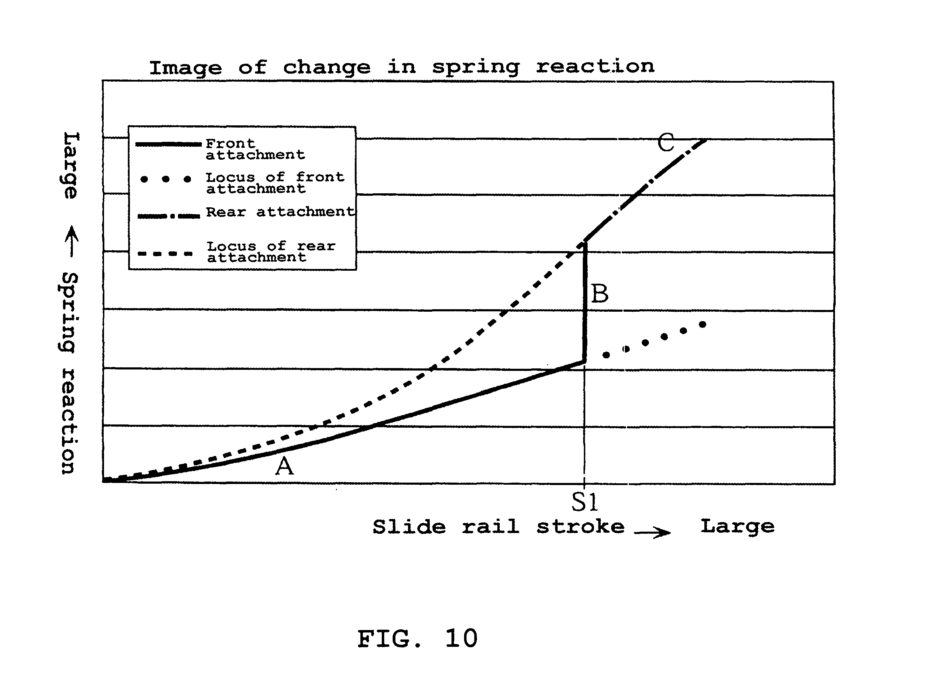

In this embodiment, the torsion springs 50 are elastically deformed in a twisted manner with an upward stroke of the slide rail 15 to absorb shocks. In this case, as shown in Fig. 9(a) to Fig. 9(c) and Fig. 10, when the upward stroke of the slide rail 15 is within a normal range, which is not greater than S1, the torsion springs 50 are elastically deformed with their extending ends 50d of the long side parts 50b supported on the spring receiving brackets 52. Thus, the spring reaction exhibits a characteristic A corresponding to the long arm length La of the long side part 50b. Namely, the suspension device exhibits a soft stroke feeling in which the spring reaction moderately increases with increase of the upward stroke of the slide rail 15 and can provide a comfortable ride.

When the upward stroke of the slide rail 15 reaches the prescribed value S1, the spring receiving parts 55 abut on the intermediate portions 50e of the long side parts 50b, and the spring reaction sharply increases in a step-like fashion as shown by the characteristic curve B. When the upward stroke of the slide rail 15 increases beyond S1, the long side parts 50b of the spring members 50 are elastically deformed by the spring receiving parts 55 as a supporting point, and the spring reaction exhibits a characteristic corresponding to the short spring length La' between its supporting point on the body and the spring receiving member 55. Namely, the spring reaction largely increases with increase of the upward stroke of the slide rail 15 as shown by the characteristic curve C. Thereby, the stroke feeling is stiff enough in the latter part of the stroke to prevent bottoming out.

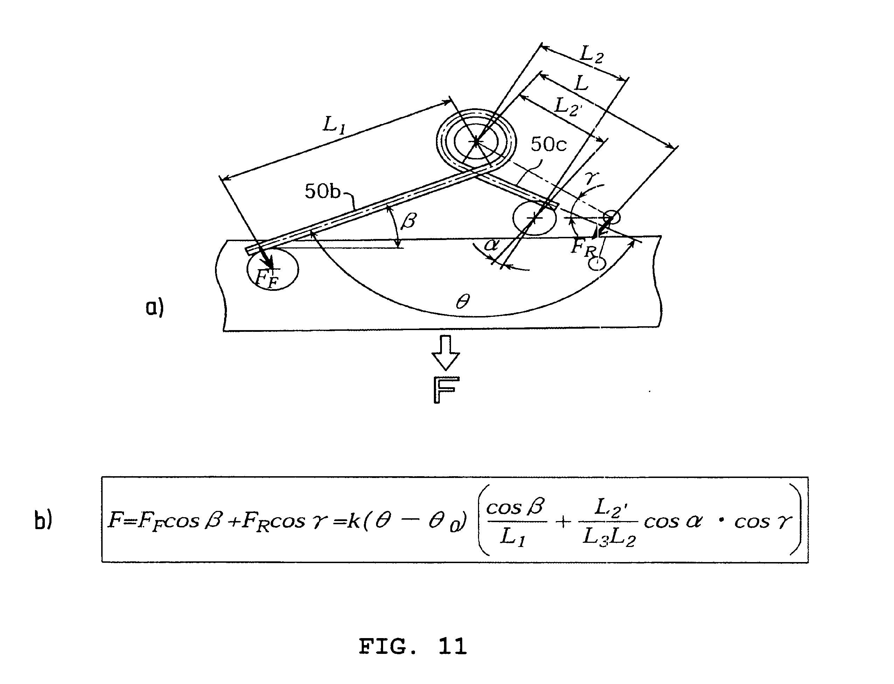

Letting L1, L2 and L3 be the arm length of the long side part of the torsion spring, the arm length of the short side part of the torsion spring and the length of the rear sliding arm, respectively, as shown in Fig. 11, the reaction F is obtained from the following equation:

$$F = F_F \cos \beta + F_R \cos \gamma = k(\theta - \theta_0) \left[ \cos \beta / L_1 + L_2' / L_3 L_2 (\cos \alpha \cdot \cos \gamma) \right]$$

wherein $F_F$ is a force which the long side part 50b exerts on the supporting point, $\beta$ is the angle formed by the long side part 50b and a horizontal line, $F_R$ is a force which the short side part 50c exerts on the supporting point, $\alpha$ is the angle formed by the short side part 50c and a horizontal line, k is a constant, $\theta$ is the angle formed by the long side part 50b and the short side part 50c, and L1 and L2 are arm length of the long side part 50b and the short side part 50c, respectively.

It is apparent from the equation that as the arm length L1 of the long side part 50b is shorter, the spring reaction F is greater.

As has been described previously, in the suspension device of this embodiment, the short side parts 50c of the torsion springs 50 are supported by the rear sliding arms 31, the extending ends 50d of the long side parts 50b are supported by the spring receiving brackets 52, and there are provided the spring receiving members 55 which abut on the long side parts 50b when the slide rail 15 strokes (upward) to change the reaction characteristic of the torsion springs 50. Thus, when the stroke is within the normal range, which is not greater than S1, a soft stroke feeling corresponding to the long arm length La of the long side parts 50b is obtained. When the slide rail 15 is further moved upward, the long side parts 50b abut on the spring receiving members 55 and the torsion spring 50 exhibits a reaction characteristic corresponding to the short arm length La' with the spring receiving members 55 as a supporting point to prevent the slide rail 15 from bottoming out.

In this embodiment, the spring receiving holes 15e are formed in the slide rail 15 at longitudinally spaced points so that each of the spring receiving members 55 can be removably attached in one of the spring receiving holes 15e. Thus, the spring reaction characteristic can be changed depending upon the user's preference.

In this embodiment, the spring reaction characteristic can be changed by changing the positions of a pair of spring receiving members 55. In the present invention, however, a plurality of pairs of spring receiving members may be provided. In this case, the spring reaction can be adjusted in a plurality of levels and the range within which the spring reaction characteristic can be selected can be widened.

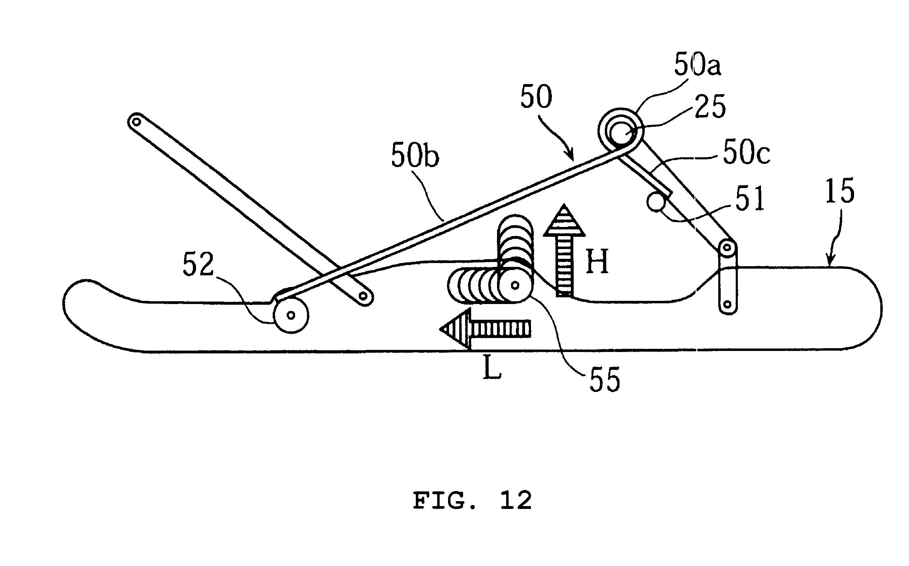

The positions of the spring receiving members 55 are not limited to those in the above embodiment, but may be changed depending upon the user's preference. As shown in Fig. 12 and Fig. 13, the positions of the spring receiving members 55 may be adjusted either or both in a vertical direction H and a longitudinal direction L in a continuous manner or in stages. In this case, the following effects can be obtained.

When the positions of the spring receiving members 55 can be adjusted in the vertical direction H, the stroke in which the spring reaction is varied can be changed. When the positions of the spring receiving members 55 can be adjusted in the longitudinal direction L, the variation in the spring reaction can be changed. Fig. 13 is an image for explaining the relation between the positions of the spring receiving members 55 and the spring characteristic. As the spring receiving members 55 are located higher and closer to the front, the spring reaction increases more moderately. As the spring receiving members 55 are located lower and closer to the rear, the spring reaction increased more sharply and the progressive effect is enhanced.

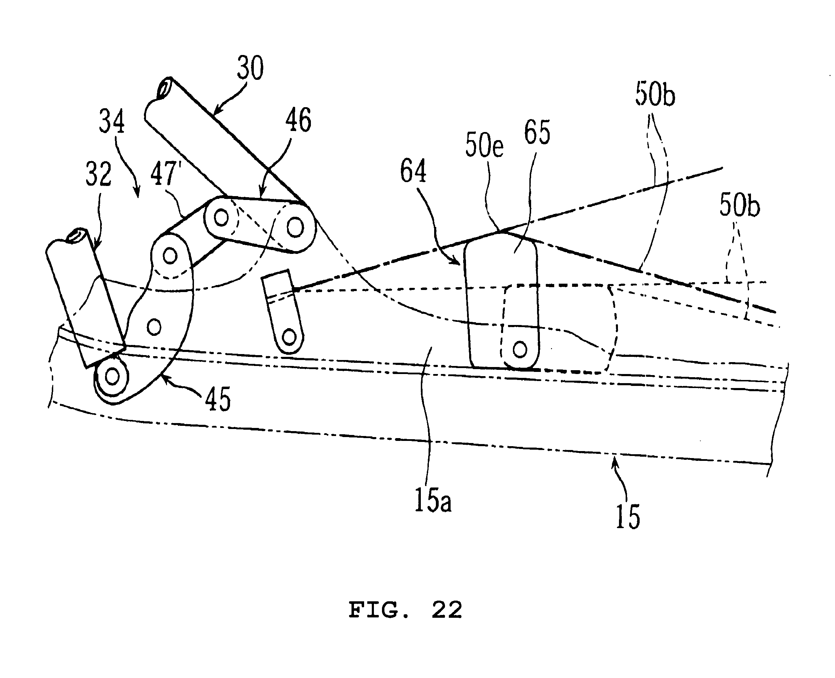

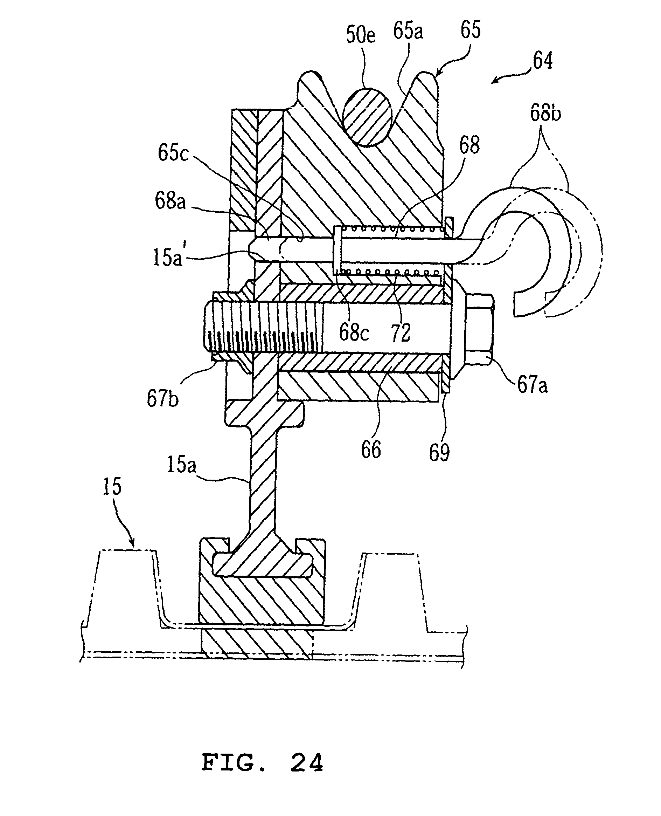

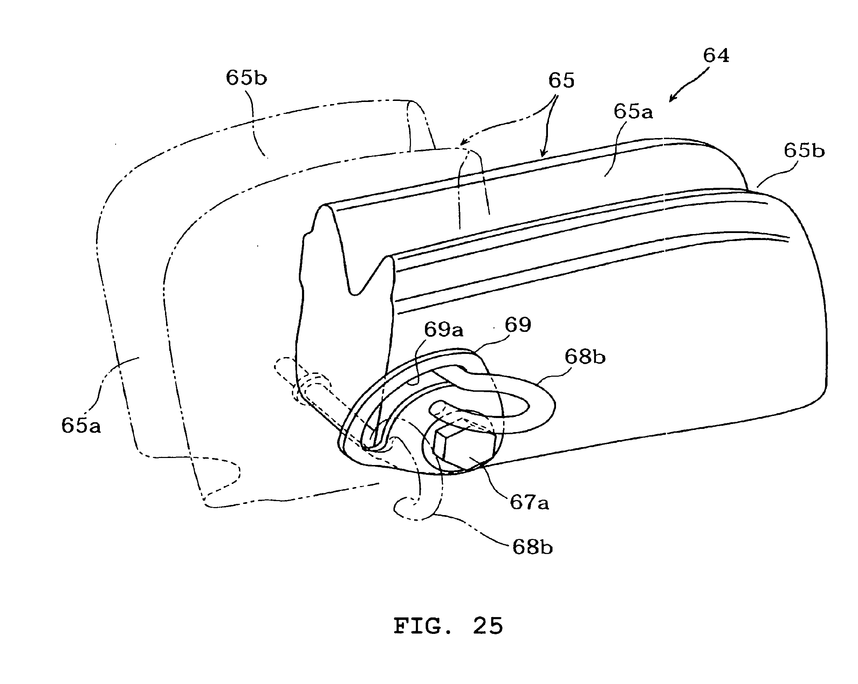

Fig. 22 to Fig. 25 are views for explaining a second embodiment of the present invention. In the second embodiment, the spring reaction characteristic can be manually changed from one suitable for one-person riding to one suitable for two-person riding easily without a tool. In the figures, the same numerals as in Fig. 1 to Fig. 21 designate the same or corresponding parts.

The second embodiment has spring receiving parts 64 for supporting the intermediate portions 50e of the long side parts 50b of the torsion springs 50. The spring receiving parts 64 are movable between a vertical position and a horizontal position relative to the slide rail 15.

Each of the spring receiving parts 64 has a spring receiving block 65 made of aluminum alloy or the like and having a generally rectangular shape as viewed from a side. Each of the spring receiving block 65 has a long spring receiving groove 65a along one long side of said rectangle and a short spring receiving groove 65b continuing from the long spring receiving groove 65a along one short side of said rectangle. The long and short spring receiving grooves 65a and 65b have a surface which is so configured that the point where the torsion spring 50 contacts the spring receiving block 65 moves toward the side of the coiled part of the torsion spring when the slide rail 15 is moved upward.

Each of the spring receiving blocks 65 is rotatably supported at the corner between the long and short sides, other than the sides in which the spring receiving grooves 65a and 65b are formed, on the side rail 15a. More specifically, the comer of the spring receiving block 65 is rotatably supported by a collar 66 secured to the side rail 15a by a bolt 67a and a nut 67b.

Each of the spring receiving blocks 65 has a lock hole 65c and a lock pin 68 inserted in the lock hole 65c. The lock pin 68 has a distal end 68a which can protrude from and retract into the spring receiving block 65 and is engageable in an engaging hole 15a' of the side rail 15a.

A guide plate 69 is disposed on the outside surface of each of the spring receiving blocks 65 and secured by the bolt 67a. The lock pin 68 has a base end protruding outward from an arcuate guide slit 69 formed through the guide plate 69 and formed into a holding part 68b having an arcuate shape. The lock pin 68 is urged by an urging spring 72 in such a direction that the distal end 68a is engaged with the engaging hole 15a'.

In this embodiment, each of the spring receiving blocks 65 is positioned in its vertical position shown by solid lines in Fig. 22 when two persons ride the vehicle and rotated to its horizontal position shown by broken lines in Fig. 22 when one person rides the vehicle. This rotation operation is made by manually pulling the holding part 68b of the lock pin 68 against the urging force of the urging spring 72 to release the engagement between the lock pin 68 and the side rail 15a and rotating the lock pin 68 to the vertical or horizontal position. When the spring receiving block 65 is rotated to a prescribed position, the lock pin 68 is engaged into the engaging hole 15a' of the side rail 15a by the urging force of the urging spring 72, whereby the spring receiving block 65 is locked in the position.

As described previously, the spring receiving blocks 65 can be easily rotated between the vertical and the horizontal positions by a simple operation without a tool. The spring receiving blocks 65 in this embodiment may be locked in a plurality of positions between the vertical and horizontal positions.

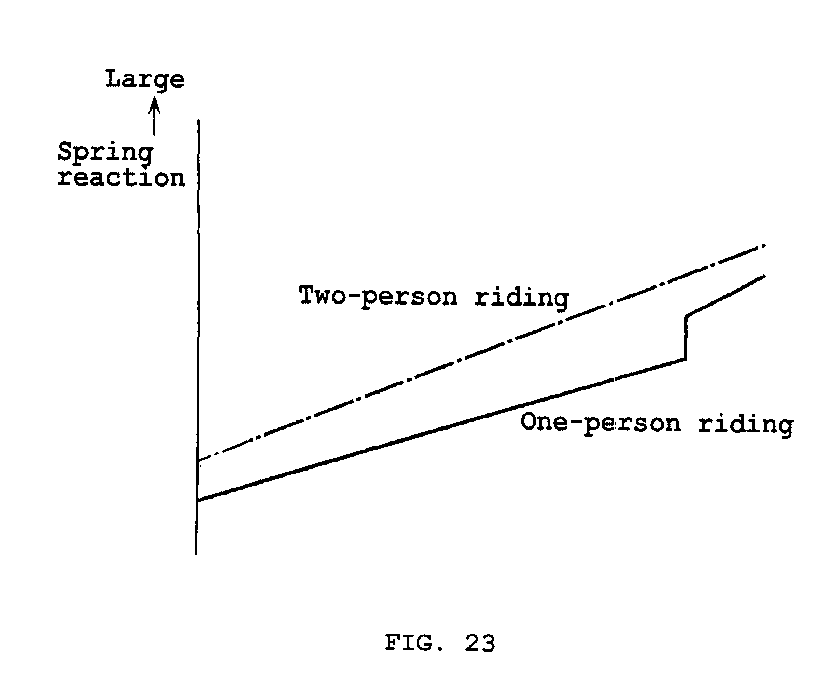

When two persons are going to ride the vehicle, each spring receiving block 65 is positioned in its vertical position. Then, the spring receiving blocks 65 abut on the intermediate portions 50e of the torsion springs 50 before the slide rail 15 strokes, for example, in a no-load state (which will be hereinafter referred to as 1G) such as when nobody rides the vehicle. Thus, the spring reaction exhibits a characteristic as shown by a dot-dashed line in Fig. 23. Thereby, the spring reaction in 1G is increased and the spring constant of the suspension system is increased so that a large load of two persons can be supported. In addition, the load balance can be changed such that a larger load is applied to the rear side.

When one person is going to ride the vehicle, each spring receiving block 65 is positioned in its horizontal position. Then, the spring receiving blocks 65 abut on the intermediate portions 50e of the torsion springs 50 when the stroke of the slide rail 15 is in an intermediate stage or later such as when it reaches a point close to its maximum value. Thereby, the spring reaction exhibits a characteristic as shown by a solid line in Fig. 23. Namely, in most of the stroke range of the slide rail 15, the spring reaction is small enough and the stroke characteristic is soft enough to provide a comfortable ride. In a range close to the maximum stroke, the spring reaction sharply increases to prevent bottoming out.

Although both the front and rear shock absorbers 32 and 33 are connected to the link mechanism 34 in the first embodiment, only the front shock absorber 32 may be connected to the link mechanism 34 in the present invention as shown in Fig. 22.

In the example shown in Fig. 22, the first link 45 connected to the front shock absorber 32 and the second link 46 connected to the front suspension arm 34 are connected by a strip-like third link 47', and the rear shock absorber 33 is not connected to the third link 47'. The rear shock absorber 33 is connected to the side rails 15a.

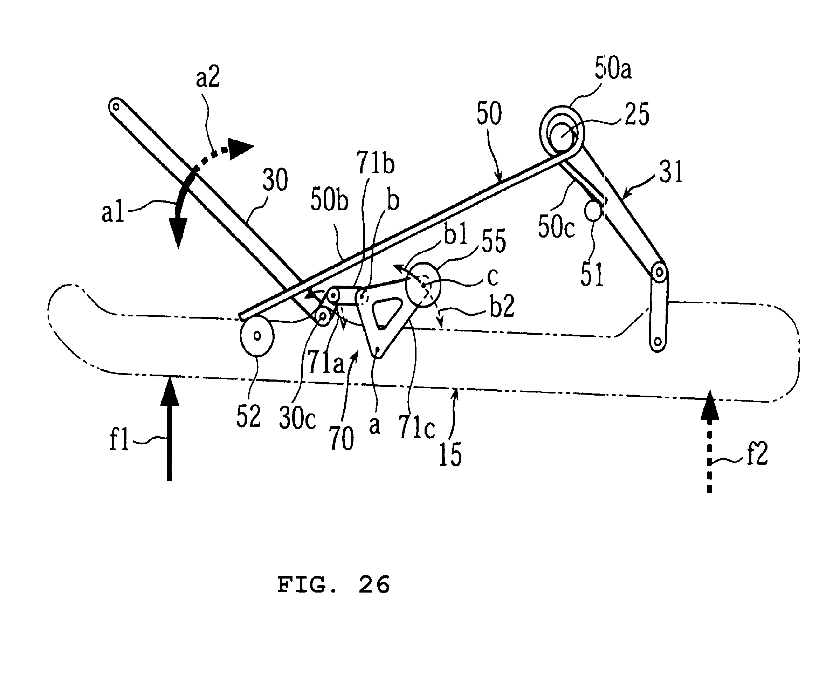

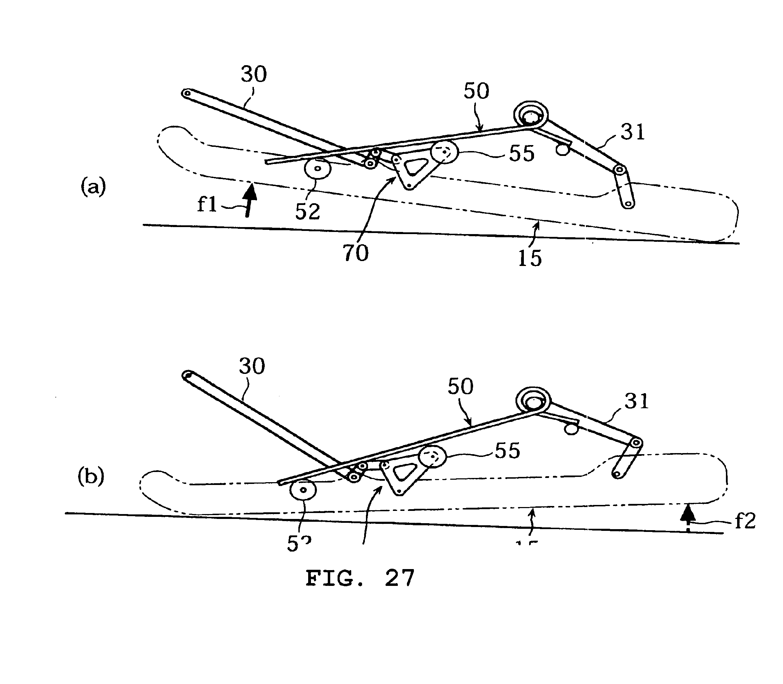

Fig. 26 and Fig. 27 are schematic views for explaining a third embodiment of the present invention. In the drawings, the same numerals as in Fig. 3 and Fig. 12 designate the same or corresponding parts.

The third embodiment has pulley-like spring receiving parts 55 each having a groove for receiving the torsion spring 50 and attached to the slide rail 15 via a link mechanism 70 which automatically changes the position of the spring receiving part 55 relative to the slide rail 15 when the slide rail 15 is moved upward.

The link mechanism 70 comprises a driving arm 71 a secured to the lower arm 30c of the front sliding arm 30 and rotatable with rotation of the front sliding arm 30, a triangular link plate 71c having a vertex "a" rotatably supported by the slide rail 15, and a link 71b connecting a second vertex "b" of the link plate 71c and the driving arm 71a. The spring receiving part 55 is rotatably supported at the third vertex "c" of the link plate 71c.

In the link mechanism 70, the configurations and the pivot points of the driving arm 71a, the link 71b and the link plate 71c are determined such that when the sliding arm 30 is rotated in the direction shown by the solid line arrow a1 or the broken line arrow a2, the link plate 71c is rotated in the same direction (in the direction shown by the solid line arrow b1 or the broken line arrow b2).

In the third embodiment, a front portion of the slide rail 15 strokes upward by a force f1, the front sliding arm 30 is relatively rotated in the direction of the solid line arrow a1 (counterclockwise). Then, the driving arms 71a, and thus the link plates 71c, of the link mechanisms 70 are also rotated counterclockwise and the spring receiving parts 55 are rotated close to the long side parts 50b of the torsion springs 50. As a result, when a force is applied to a front part of the slide rail 15, the spring receiving parts 55 abut on the long side parts 50b of the torsion springs 50 relatively early to increase the spring reaction (see Fig. 27 (a)).

When a rear portion of the slide rail 15 strokes upward by a force f2, the front sliding arm 30 is rotated in the direction of the broken line arrow a2 (clockwise). Then, the driving arms 71a, and thus the link plates 71c, of the link mechanisms 70 are rotated clockwise and the spring receiving parts 55 are rotated away from the torsion springs 50b. As a result, when a force is applied to a rear part of the slide rail 15, the spring receiving parts 55 abut on the long side parts 50b of the torsion springs 50 relatively late (see Fig. 27(b)).

As described previously, in this embodiment, the spring receiving parts 55 are pivoted by the link mechanisms 70 for automatically changing the position of the spring receiving parts 55 relative to the slide rail 15 according to the stroke state of the slide rail 15. Thus, by properly selecting the component parts of the link mechanisms 70, the operation conditions of the spring receiving parts 55 can be arbitrarily preset. Also, since the operation angle of the springs is small, spring stress generated in the torsion springs 50 is small.

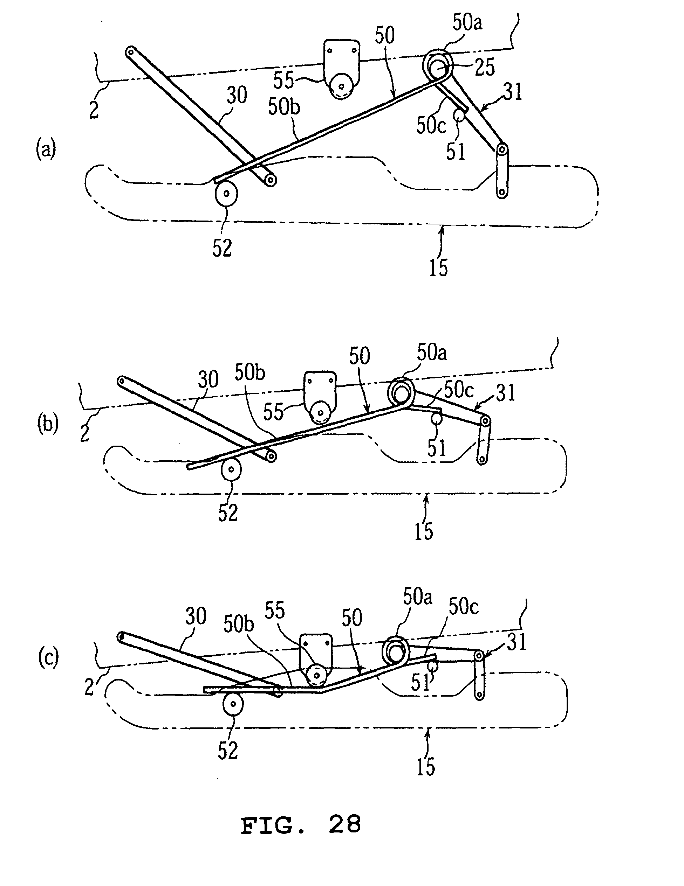

Fig. 28 is views for explaining a fourth embodiment of the present invention. In the drawing, the same numerals as in Fig. 3, Fig. 12 and Fig. 26 designate the same or corresponding parts.

In this embodiment, the spring receiving parts 55 are provided on the side of the body frame 2. In a normal operation range where the upward stroke of the slide rail 15 is not greater than a prescribed value, the long side parts 50b of the torsion springs 50 do not abut on the spring receiving parts 55 as shown in Fig. 28(a). When the upward stroke of the slide rail 15 reaches a prescribed value, the long side parts 50b of the torsion springs 50 abut on the spring receiving parts 55 as shown in Fig. 28(b). When the upward stroke of the slide rail 15 increases beyond the prescribed value, intermediate portions of the long side parts 50b of the torsion springs 50 are pressed against the spring receiving parts 55, and the long side parts 50b are elastically deformed with their both ends supported.

As described previously, in the fourth embodiment, since the spring receiving parts 55 are provided on the side of the body frame 2, the weight of the parts which stroke vertically together with the slide rail 15, namely, the unsprung weight is small. Thus, the responsiveness of the suspension device is wholly improved. In addition, the amount of deformation of the torsion springs 50 is small, the spring stress generated in the torsion springs is small.

In the embodiment, the intermediate parts of the long side parts 50b of the torsion springs 50 are pressed against the spring receiving parts 55 and the long side parts 50b are elastically deformed with their both ends supported. Thus, a spring reaction characteristic which is different from those in the first to third embodiments can be obtained.

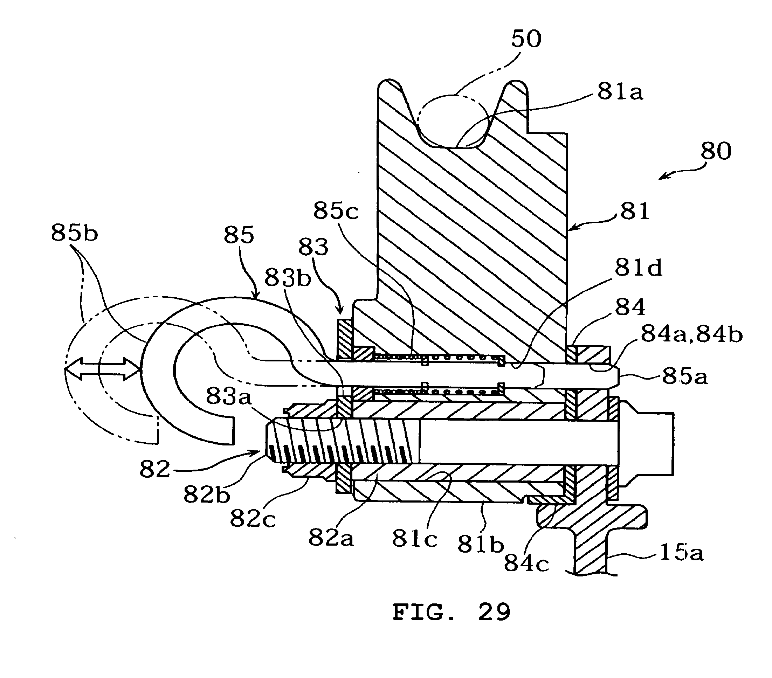

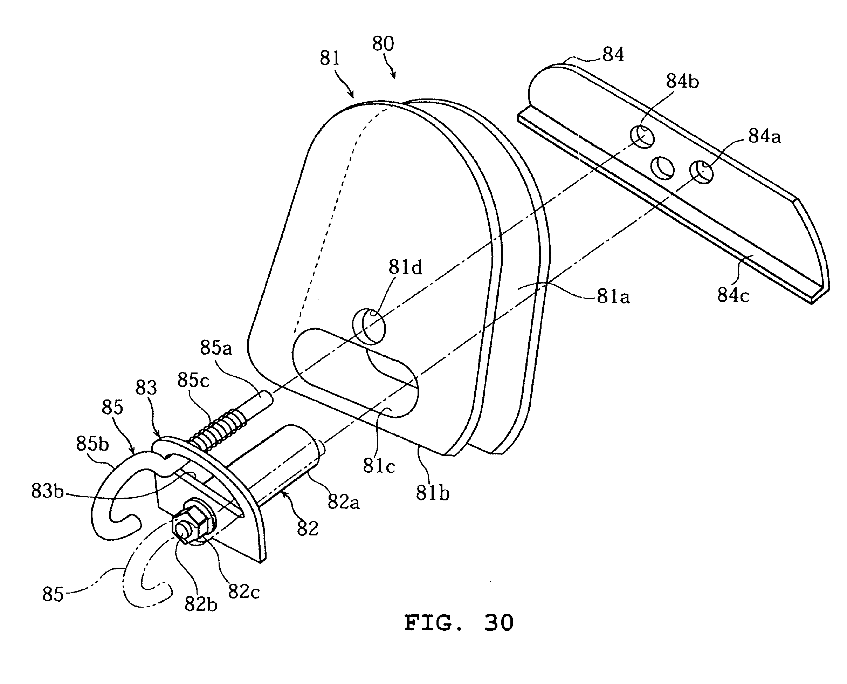

Fig. 29 to Fig. 33 are views for explaining a fifth embodiment of the present invention. In the drawings, the same numerals as in Fig. 22 to Fig. 25 designate the same or corresponding parts.

The fifth embodiment has spring receiving parts 80 for supporting the intermediate portions of the long side parts 50b of the torsion springs 50. Each of the spring receiving parts 80 is attached to the slide rail 15 so as to be slidable in the longitudinal direction of the vehicle. When the spring receiving parts 80 are slided so that supporting shafts 82 are in rearmost positions, the spring receiving parts 80 can be rotated rearward. When the spring receiving parts 80 are slided so that the supporting shafts 82 are in foremost positions, the spring receiving parts 82 can be rotated forward.

Each of the spring receiving parts 80 has a spring receiving block 81 made of aluminum alloy or the like and having a generally plate shape. Each of the spring receiving block 81 has a spring receiving groove 81 a on which the torsion spring 50 abuts and that is formed in a curved part around the spring receiving block 81 except for a generally linear base 81b.

The spring receiving block 81 has a long hole 81c formed extending along the base portion 81b in a part on the side of the base portion 81 b, in which the spring receiving groove 81a is not formed. The supporting shaft 82 is inserted through the long hole 81c. The supporting shaft 82 comprises a collar 82a, a bolt 82b and a nut 82c for fastening the collar 82a to the slide rail 15. A guide plate 83 is interposed between an end of the collar 82a and the nut 82c. A block receiving plate 84 is interposed between the other end of the collar 82a and the slide rail 15.

When the spring receiving block 81 is erected with the long hole 81c positioned in its lower part, the spring receiving block 81 is slidable in the longitudinal direction for the length of the long hole 81 c on a base 84c of the block receiving plate 84. As the spring receiving block 81 is slided, the collar 82a is relatively slided in the long hole 81c.

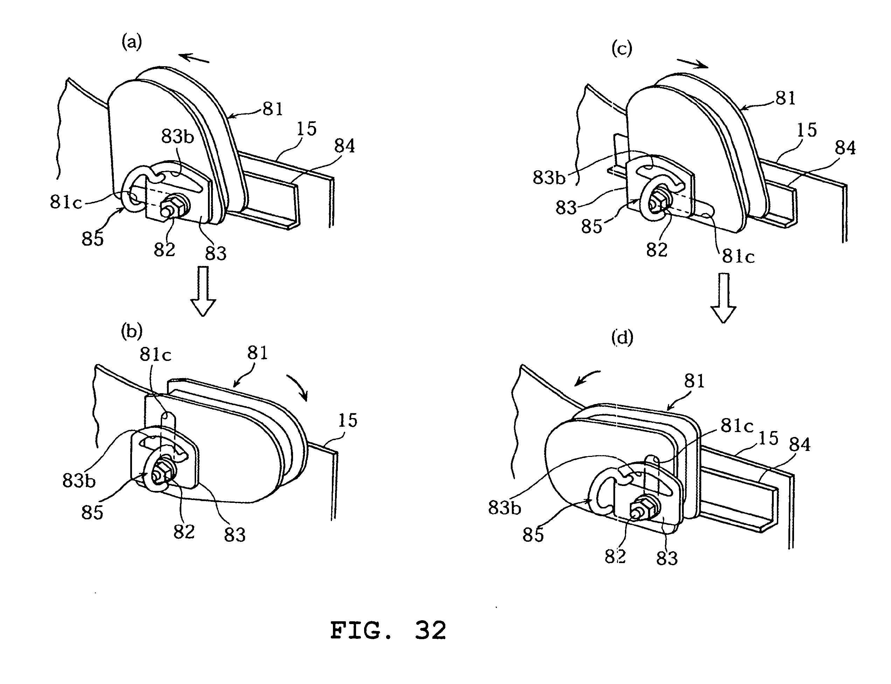

When the spring receiving block 81 is erected and moved to its foremost position with the base 81b abutting on the base 84c of the block receiving plate 84 (see Fig. 32(a)), the spring receiving block 81 is rotatable around the supporting shaft 82 to a rear lying position with the supporting shaft 82 in its rearmost position in the long hole 81c (see Fig. 32(b)). On the other hand, when the spring receiving block 81 is moved to its rearmost position (see Fig. 32 (c)), the spring receiving block 81 is rotatable around the supporting shaft 82 to a front lying position with the supporting shaft 82 in its foremost position in the long hole 81c (see Fig. 32(d)).

The spring receiving block 81 has a lock hole 81 d and a lock pin 85 inserted in the lock hole 81d so as to be slidable in its axial direction. The lock pin 85 has a base end formed into a holding part 85b having an arcuate shape. The lock pin 85 has a distal end 85a which can protrude from and retract into the spring receiving block 81 and is engageable in either an engaging hole 84a or 84b formed to penetrate from the block receiving plate 84 through the side rail 15a. The lock pin 85 is urged by an urging spring 85c in such a direction that the distal end 85a is engaged with the engaging hole 84a or 84b.

When the spring receiving block 81 is either in the erected rearmost position (Fig. 32(c)) or in the rear lying position (Fig. 32(b)), the lock pin 85 is engaged with the engaging hole 84a on the rear side. When the spring receiving block 81 is either in the erected foremost position (Fig. 32(a)) or in the front lying position (Fig. 32(d)), the lock pin 85 is engaged with the engaging hole 84b on the front side.

The guide plate 83 disposed on the outer side of the spring receiving block 81 has a bolt hole 83a and a guide opening 83b, through which the bolt 82b and the lock pin 85 are inserted, respectively. The guide opening 83b has a linear lower edge along the longitudinal sliding locus of the lock pin 85 and an arcuate upper edge along the rotating locus of the lock pin 85 around the supporting shaft 82.

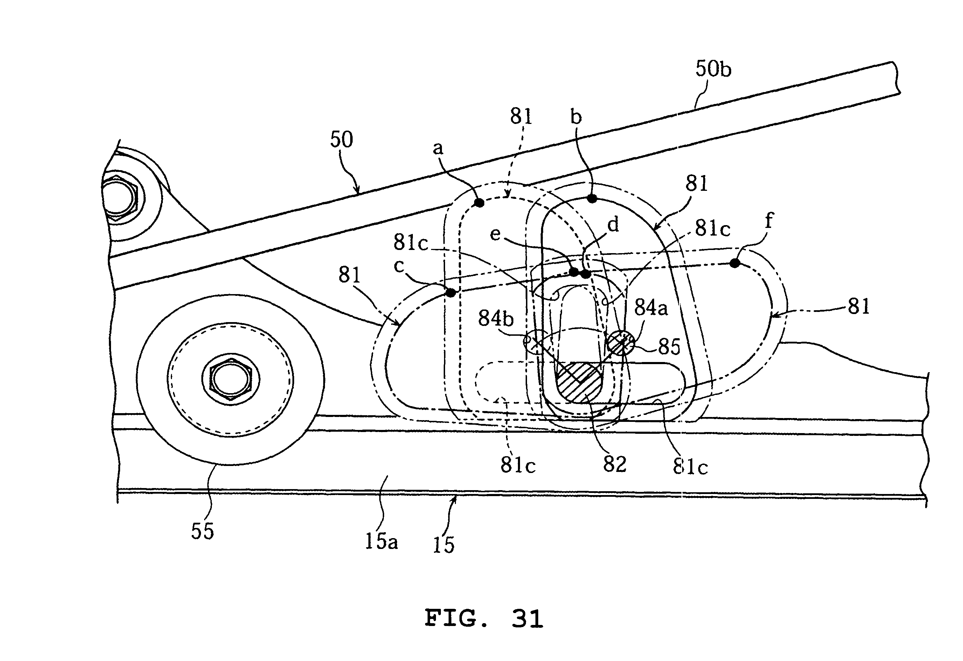

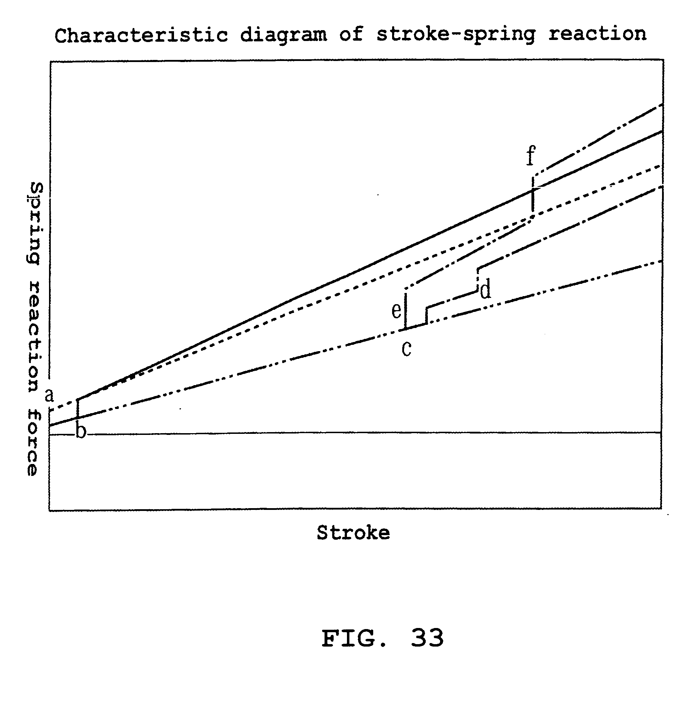

In the fifth embodiment, when soft riding feeling is desired with one person riding, for example, the spring receiving block 81 is rotated to the front lying position as shown by a dot-dashed line in Fig. 31 (see Fig. 32(d)). Then, the stroke-spring reaction characteristic varies as shown by a dot-dashed line in Fig. 33. That is, the spring member 50 abuts on the spring receiving block 81 at a point "c" as the stroke increases. When the stroke further increases, the spring member 50 abuts on the spring receiving block 81 at a point "d". Thereby, the spring reaction is increased slightly more than when no spring receiving part is provided (as shown by a chain triple-dashed line in Fig. 33).

When hard riding feeling is desired with one person riding, the spring receiving block 81 is rotated to the rear lying position as shown by a chain double-dashed line in Fig. 31 (see Fig. 32(b)). Then, the stroke-spring reaction characteristic varies as shown by a chain double-dashed line in Fig. 33. That is, the spring member 50 abuts on the spring receiving block 81 at a point "e" as the stroke increases. When the stroke further increases, the spring member 50 abuts on the spring receiving block 81 at a point "f". Thereby, the spring reaction is increased further more than when soft riding feeling is desired with one person riding, and relatively hard riding feeling is obtained.

When soft riding feeling is desired with two persons riding (when the rider in the rear is a relatively light person such as a child), for example, the spring receiving block 81 is moved to the erected foremost position as shown by a broken line in Fig. 31 (see Fig. 32(a)). Then, the stroke-spring reaction characteristic varies as shown by a broken line in Fig. 33. That is, the spring member 50 abuts on the spring receiving block 81 at a point "a" when the stroke is zero, and the spring reaction is larger than in other cases. When the stroke increases, the spring member 50 abuts on the spring receiving block 81 still at the same point. Thereby, the spring reaction is increased with a slightly larger inclination than when no spring receiving part is provided (as shown by a chain triple-dashed line in Fig. 33).

When hard riding feeling is desired with two persons riding (when the rider in the rear is a relatively heavy person such as an adult), the spring receiving block 81 is moved to the erected rearmost position as shown by a solid line in Fig. 31 (see Fig. 32(c)). Then, the stroke-spring reaction characteristic varies as shown by a solid line in Fig. 33. That is, the spring member 50 abuts on the spring receiving block 81 at a point "b" when the stroke slightly increases, and the spring reaction increases as much as when soft riding feeling is desired with two persons riding. When the stroke further increases, the spring member 50 abuts on the spring receiving block 81 still at the same point. Nevertheless, the spring reaction is increased with a larger inclination than when soft riding feeling is desired with two persons riding.

The operation of the spring receiving member 81 is made by manually pulling the holding part 85b of the lock pin 85 against the urging force of the urging spring 85c to release the engagement between the lock pin 85 and the side rail 15a, and by both/either sliding the lock pin 85 in the longitudinal direction and/or rotating the lock pin 85 in the longitudinal direction. When the spring receiving member 81 is positioned in a prescribed angle and a prescribed position and the pulling force applied to the lock pin 85 is reduced, the lock pin 85 is engaged into the engaging hole 84a or 84b of the side rail 15a by the urging force of the urging spring 85c, whereby the spring receiving member 81 is locked in the position.

As described previously, the spring receiving blocks 81 can be easily slided in the longitudinal direction and rotated in the longitudinal direction by a simple operation without a tool. The spring receiving blocks 81 in this embodiment may be locked in a plurality of positions between the front and rear positions.

The spring receiving block 81 can be slided in the longitudinal direction and rotated forward and rearward when the spring receiving block 81 is positioned in its rearmost and foremost positions, respectively. Thus, the relative position of the spring receiving member 81 can be changed through a wider range, whereby the spring reaction characteristic depending upon the user's preference can be obtained with a simple structure and a simple operation.

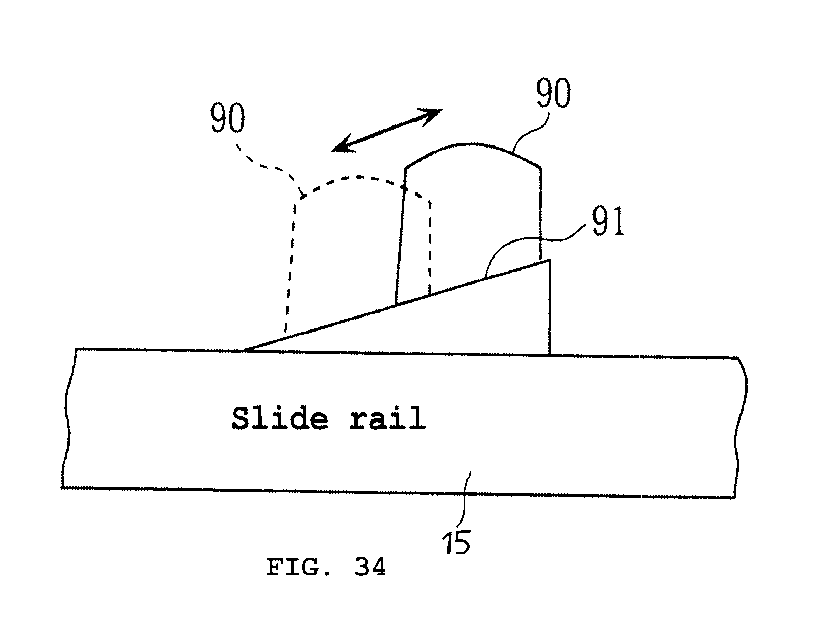

Although the spring receiving member can be slided in the longitudinal direction and rotated forward and rearward as a configuration with which the relative position of the spring receiving member is changed in the fifth embodiment, one of variation examples can also be adopted as such a configuration. Fig. 34, Fig. 35, and Fig. 36 are schematic views showing sixth, seventh, and eighth embodiments in which the relative position of the spring receiving member is changed.

In the sixth embodiment shown in Fig. 34, a spring receiving member 90 is slidably disposed on an inclined surface 91 formed on the slide rail 15 and becoming higher toward the rear of the vehicle.

In the sixth embodiment, since the spring receiving member 90 is slidably placed on the linear inclined surface 91, the position of the spring receiving member 90 can be changed in the longitudinal direction and in the vertical direction at the same time while the angle of the spring receiving member 90 relative to the slide rail 15 is kept constant.

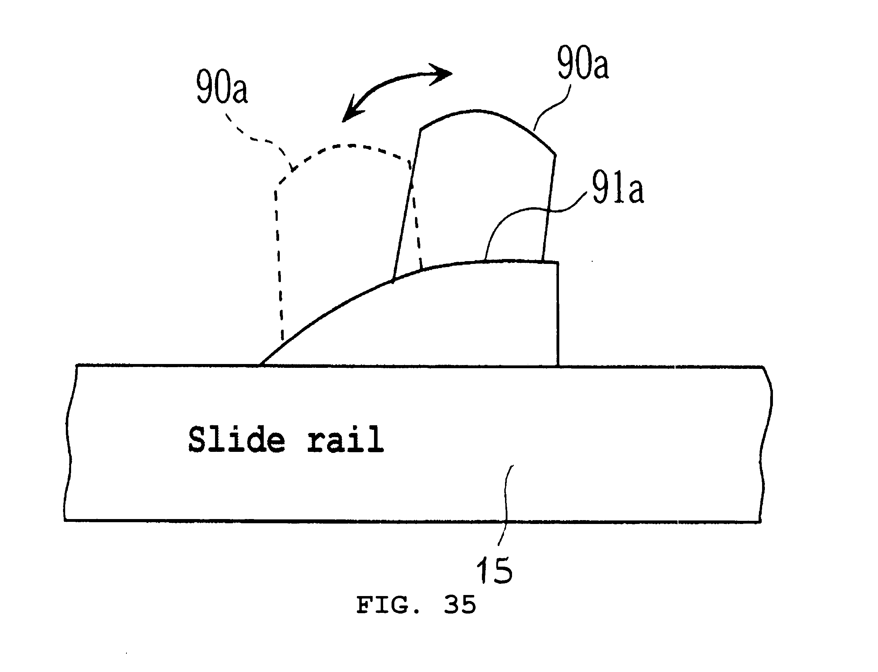

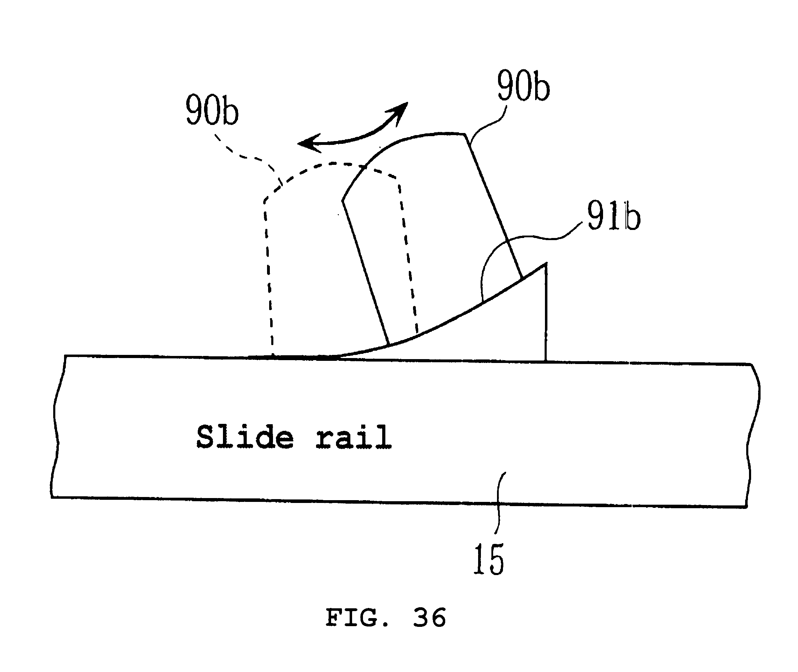

In the seventh embodiment shown in Fig. 35, a spring receiving member 90a is slidably disposed on a convexly curved inclined surface 91a formed on the slide rail 15 and becoming higher toward the rear of the vehicle. In the eighth embodiment shown in Fig. 36, a spring receiving member 90b is slidably disposed on a concavely curved inclined surface 91b formed on the slide rail 15 and becoming higher toward the rear of the vehicle.

The inclined surfaces 91, 91a, and 91b may be formed so as to become higher toward the front of the vehicle, thereby properly varying the spring reaction characteristic.

In the seventh and eighth embodiments, the inclined surfaces are convexly and concavely curved surfaces, respectively, which become higher toward the rear of the vehicle. Thus, the positions of the spring receiving members 90a and 90b can be changed in the longitudinal direction and in the vertical direction while the angles of the spring receiving members 90a and 90b relative to the slide rail 15 can be varied, whereby the spring reaction characteristic can be varied through a further wider range.

Again, in other words, a suspension device for a snow vehicle comprises a slide rail disposed below a body frame for pressing a track belt against a road surface and guiding the same, said slide rail supported by a body for vertical swinging movement, and a spring member for urging said slide rail in a direction away from said body frame, wherein said spring member is a torsion spring or a plate spring having one end supported on said body frame and the other end supported on said slide rail, and that there is provided a spring receiving part which changes the supporting point of said spring member on said slide rail when said slide rail is moved upward, said spring receiving part being attachable to and removable from said slide rail and adjustable in at least one of a vertical direction and a longitudinal direction related to said slide rail.

As described above, in order to provide a suspension device for a snow vehicle which can improve riding comfort and does not bottom out easily and whose spring reaction characteristic can be changed depending upon the user's preference, it is proposed that one end of a torsion spring 50 is supported on a body frame 2 and the other end of the torsion spring 50 is supported on a slide rail 15. A spring receiving part 55 which changes the supporting point of the torsion spring 50 on the slide rail 15 when the slide rail 15 is moved upward is provided. The spring receiving part 55 is attachable to and removable from the slide rail 15 and adjustable in the longitudinal direction relative to the slide rail.

## Claims

1. A suspension device for a vehicle, in particular a snow vehicle, comprising:

   a slide rail (15) for pressing a track belt (16) against a riding surface, said slide rail (15) being supported by a body (2) of said vehicle, and
   a spring member (50) urging said slide rail (15) in a direction away from said body (2), wherein one end thereof is supported on said slide rail (15) by a spring receiving part (55,65,80,90),

   **characterized in that**
   said spring receiving part (55,65,80,90) is adjustable relative to said slide rail (15).

2. Suspension device according to claim 1, **characterized in that** said spring member (50) is a torsion spring or a plate spring.

3. Suspension device according to claim 1 or 2, **characterized in that** said spring receiving part (55,65,80,90) is attachable and removable from said side rail (15).

4. Suspension device according to at least one of the claims 1 to 3, **characterized in that** said spring receiving part (55,65,80,90) is adjustable in a vertical and/or longitudinal direction relative to said slide rail (15).

5. Suspension device according to at least one of the claims 1 to 4, **characterized in that** there is a plurality of spring receiving parts (55,65,80,90) provided.

6. Suspension device according to at least one of the claims 1 to 5, **characterized in that** said spring receiving part (65,80) is adjustable between a vertical position and a horizontal position relative to said slide rail (15).

7. Suspension device according to claim 6, **characterized in that** said spring receiving part (65,80) is configured to abut on said spring member (50) in an early stage of upward movement of said slide rail (15) when positioned in the vertical position and abut on said spring member (50) in an intermediate stage or later of upward movement of said slide rail (15) when positioned in said horizontal position.

8. Suspension device according to at least one of the claims 1 to 7, **characterized in that** said spring receiving part (55) is attached to said slide rail (15) via a link mechanism (90) which changes the position of said spring receiving part (55) relative to said slide rail (15) upon a movement thereof.

9. Suspension device according to at least one of the claims 1 to 8, **characterized in that** said second end of said spring member is supported on said body (2) or on a suspension arm (31) connecting said slide rail (15) and said body (2).

**10.** Suspension device according to at least one of the claims 1 to 9, **characterized in that** said spring receiving part (55) which changes the supporting point of said spring member (50) on said side rail (15) upon a movement thereof is provided on said body (2), in particular being a body frame of the vehicle.

**11.** Suspension device according to at least one of the claims 1 to 10, **characterized in that** said spring receiving part (55,65,80,90) is attached to said slide rail (15) or to said body (2) so as to be slidable in the generally longitudinal direction.

**12.** Suspension device according to at least one of the claims 1 to 11, **characterized in that** said spring receiving part (80) has a long hole (81 c) extending in the generally longitudinal direction, through which a supporting shaft (82) secured to said slide rail (15) is inserted so as to be slidable in the generally longitudinal direction.

**13.** Suspension device according to claim 12, **characterized in that** said spring receiving part (80) is rotatable in the forward and rearward directions around said supporting shaft (82) when said supporting shaft is positioned in foremost and rearmost positions in the long hole (31c), respectively.

**14.** Suspension device according to at least one of the ciaims 1 to 13, **characterized in that** said spring receiving part (90) is slidable along an inclined surface (91,91a,91b) formed on said slide rail (15).

**15.** Suspension device according to claim 14, **characterized in that** said inclined surface (91) is higher toward the rear or the front of the slide rail (15).

**16.** Suspension device according to claim 14 or 15, **characterized in that** said inclined surface is linear, convexly curved and/or concavely curved.

**17.** Snow mobile comprising a body (2) and having an engine unit (3) and a steering device (6,10,11) mounted thereto, **characterized by** further comprising a suspension unit according to at least one of the claims 1 to 16.

EP 1 433 693 A2

FIG. 1

15

FIG. 2

FIG. 3

Front

FIG. 4

EP 1 433 693 A2

FIG. 5

FIG. 6

EP 1 433 693 A2

FIG. 7

EP 1 433 693 A2

FIG. 8

EP 1 433 693 A2

(a)

A Normal range

(b)

B Changing point

(c)

C Variable range

FIG. 9

23

Image of change in spring reaction

Large ← Spring reaction

Front attachment

• • • Locus of front attachment

▬ · ▬ Rear attachment

- - - Locus of rear attachment

Slide rail stroke → Large

S1

A

B

C

FIG. 10

EP 1 433 693 A2

a)

b)

$$F = F_F \cos\beta + F_R \cos\gamma = k(\theta - \theta_0)\left(\frac{\cos\beta}{L_1} + \frac{L_{2'}}{L_3 L_2}\cos\alpha \cdot \cos\gamma\right)$$

FIG. 11

FIG. 12

EP 1 433 693 A2

Image of change in reaction

Large ← Spring reaction

Slide rail stroke → Large

L

H

FIG. 13

EP 1 433 693 A2

(a) Lmax→Lmin Image of Lmax to Lmin stroke (from full rebound state)

(b) Lmin Image of stroke with Lmax to Lmin constant (from full rebound state)

FIG. 14

Image of spring reaction

Large ← Spring reaction

Slide rail stroke → Large

L: constant
L: variable

FIG. 15

EP 1 433 693 A2

FIG. 16

Front stroke (force applied to front part)

FIG. 17

Progressive characteristic

Front portion before modification

Rear portion before modification

Front portion in this invention

Rear portion in this invention

SHOCK RATIO

Stroke of front portion

Parallel stroke (force applied evenly)

FIG. 18

FIG. 19

EP 1 433 693 A2

Rear stroke (force applied to rear part)

FIG. 20

Legend:
- Front portion before modification
- Rear portion before modification
- Front portion in this invention
- Rear portion in this invention

SHOCK RATIO (vertical axis)

Stroke of rear portion (horizontal axis)

Significant drop = bottoming out

Large variation

FIG. 21

EP 1 433 693 A2

FIG. 22

EP 1 433 693 A2

FIG. 23

FIG. 24

FIG. 25

EP 1 433 693 A2

FIG. 26

EP 1 433 693 A2

(a)

30

50

31

55

f1

52

70

15

(b)

30

50

31

55

5?

f2

FIG. 27

EP 1 433 693 A2

FIG. 28

FIG. 29

EP 1 433 693 A2

FIG. 30

FIG. 31

EP 1 433 693 A2

FIG. 32

Characteristic diagram of stroke-spring reaction

FIG. 33

FIG. 34

90a

90a

91a

Slide rail

15

FIG. 35

EP 1 433 693 A2

FIG. 36

90b 90b 91b

Slide rail

15

EP 1 433 693 A2